# EUROPEAN PATENT SPECIFICATION

(11) **EP 4 303 652 B1**
(45) Date of publication and mention of the grant of the patent: **20.08.2025**
(21) Application number: 22183564.8
(22) Date of filing: 07.07.2022
(51) Int. Cl.: G03B 17/08

(54) **CAMERA MODULE, HEAD-WEARABLE EYE TRACKING DEVICE, AND METHOD FOR MANUFACTURING A CAMERA MODULE**
KAMERAMODUL, AM KOPF TRAGBARE AUGENVERFOLGUNGSVORRICHTUNG UND VERFAHREN ZUR HERSTELLUNG EINES KAMERAMODULS
MODULE DE CAMÉRA, DISPOSITIF DE SUIVI OCULAIRE À PORTER SUR LA TÊTE ET PROCÉDÉ DE FABRICATION D'UN MODULE DE CAMÉRA

(43) Date of publication of application: 10.01.2024
(73) Proprietor: Pupil Labs GmbH, 12047 Berlin (DE)
(72) Inventor: KASSNER, Moritz, 10967 Berlin (DE)
(74) Representative: Zimmermann & Partner Patentanwälte mbB

(56) References cited:
- WO-A1-2008/045137
- WO-A1-2021/164867
- WO-A1-2022/135660
- WO-A1-2022/237954
- US-A1- 2017 363 885
- US-A1- 2022 083 134

## Description

### TECHNICAL FIELD

Embodiments of the present invention relate to a camera module for complementing a support structure of a head-wearable device to form a head-wearable eye tracking device, a head-wearable eye tracking device, and a manufacturing method.

### BACKGROUND

Portable eye tracking devices for eye tracking and/or to detect one or more gaze-related parameters of a user, for example in the form of head-wearable spectacle-like systems offer many advantages over stationary, remote eye tracking systems when it comes to the range of possible application scenarios and use cases. Outdoor activities like sports or tasks like operating large machinery are examples for eye tracking application areas in which free head and body movement is required and for which head-worn devices are thus the solution of choice. At the same time, such use cases often also require the wearer to wear specialized eyewear, like protective eyeglasses of various kinds. Pilot visor helmets, skiing- or swimming-goggles, sports helmets, head-band structures and welding protective googles are further examples. Further, physiological features like head or nose shapes of the wearers can vary in wide ranges, e.g. as a function of ethnicity or age.

Existing portable devices traditionally provide integrated spectacle-type systems which do not provide enough flexibility to fit different specialized scenarios and/or are not suitable for children.

Document EP 3973346 A1 describes an eye tracking module for attachably complementing a head-wearable device of a user allowing for flexibility and/or adaptability to different use cases.

WO2021164867 discloses a camera module for complementing a frame of a head-wearable device to form a head-wearable eye tracking device, with a base structure having upper portion, first and second legs with first and second eye camera and a scene camera.

However, there is still room to further improve portable eye trackers and head-wearable eye tracking devices, respectively, in particular with regard to manufacturing, long term mechanical stability, reproducibility and/or accuracy.

### SUMMARY

According to an embodiment of a camera module for complementing a support structure of a head-wearable device to form a head-wearable eye tracking device, the camera module includes a one-piece base structure which includes an at least semi-transparent material, typically a substantially transparent material and includes an upper portion, a first leg portion and a second leg portion. A camera connecting structure is embedded in the one-piece base structure. A first eye camera is connected with the camera connecting structure, and arranged in and/or on the first leg portion. A second eye camera is connected with the camera connecting structure, and arranged in and/or on the second leg portion. A scene camera is connected with the camera connecting structure, and arranged in and/or on the upper portion.

The first eye camera may be used for taking (recording) first images of at least a portion of a first eye of the user wearing the head-wearable eye tracking device, e.g. a left eye, of the user, and the second eye camera may be used for taking (recording) second images of at least a portion of a second eye of the user, e.g. of a right eye of the user.

Within this specification the terms "first camera", "first eye camera" and "left camera" are used synonymously. Likewise, the terms "second camera", "second eye camera" and "right camera" are used synonymously herein.

The first leg portion and the second leg portion, are typically implemented as comparatively thin, elongated elements, in particular respective camera arms. For example, the respective leg portion may have a thickness of less than about 5 mm or even 3 mm, at least close to the upper portion.

The base structure and the legs are designed in this way to avoid any (unwanted) contact of the leg portions with the user's nose or face, and/or to reduce occlusion of the visual field of the user.

The camera module is typically not configured to shape a nose bridge portion, instead the support structure of the complementing head-wearable device may contain a nose bridge portion.

In this regard it is noted that making the first leg portion and the second leg portion sufficiently transparent and thin, and not part of the support structure and the nose bridge portion, respectively, allows for camera placement further towards the forward-facing lines of sight of the user while keeping both product design compact and occlusion low or even minimal.

The recorded eye images do not necessarily need to be a picture as visible by the human eye, but can also be an appropriate representation of the recorded (filmed) eye in a range of light non-visible for humans.

The recorded eye images may e.g. be used for determining one or more gaze-related parameters of a user wearing a head-wearable eye tracking device provided with the camera module. This may even be done by a controller of the camera module, which in these embodiments may form an eye tracking module, but also by an external device, e.g. a companion device such as a tablet or smartphone connectable with the camera module, typically via the head-wearable device.

The gaze-direction related parameter may be a gaze direction, a cyclopean gaze direction, a 3D gaze point, a 2D gaze point, a visual axis orientation, an optical axis orientation, a pupil axis orientation, and a line of sight orientation of the user.

The gaze-related parameter may be a gaze-direction related parameter or a position and/or an eyelid closure, a pupil area, a pupil size, a pupil diameter, a measure of cognitive load, a sclera characteristic, an iris diameter, a characteristic of a blood vessel, a cornea characteristic of at least one eye, a cornea radius, an eyeball radius, a distance pupil-center to cornea-center, a distance cornea-center to eyeball-center, a distance pupil-center to limbus center, a cornea keratometric index of refraction, a cornea index of refraction, a vitreous humor index of refraction, a distance crystalline lens to eyeball-center, to cornea center and/or to corneal apex, a crystalline lens index of refraction, a degree of astigmatism, an orientation angle of a flat and/or a steep axis, a limbus major and/or minor axes orientation, an eye cyclo-torsion, an eye intra-ocular distance, an eye vergence, a statistics over eye adduction and/or eye abduction, and a statistics over eye elevation and/or eye depression, data about blink events, drowsiness and/or awareness of the user, parameters for user iris verification and/or identification.

The scene camera may be used for taking images of a field of view of the user wearing the head-wearable device complemented with the camera module. In the following, the images of the field of view of the user are also referred to as scene images. Accordingly, the scene camera is not to be understood as a camera for taking a picture of an eye of the user.

For reasons of accuracy, the scene camera may have a resolution of at least 640 x 480 pixels or at least 800 x 600 pixels, more typically of at least 1024 x 768 pixels, and even more typically of at least 1280 × 1024 pixels or at least 1920 × 1080 pixels (at least VGA SVGA or HD).

The resolution of the eye cameras and the images may be lower compared to the scene camera, e.g. be at most 400x400, or even at most 200x200.

Corresponding scene and eye images may e.g. be used to determine what the user is looking at. Again, this may be done by the camera module or by an external device.

As the cameras of the camera module are firmly connected with the one-piece base structure, the (relative) camera poses, i.e. the positions and orientations of the cameras with respect to each other may be particularly precisely fixed during manufacturing in a comparatively efficient and/or simple way also ensuring mechanical long-term-stability and reproducibility. This is advantageous for achieving high eye tracking accuracy and high accuracy in determining eye parameters, respectively. For example, the knowledge of the relative eye camera poses, i.e. the relative positions and orientations of the first and second eye cameras are shown to be important for determining eye parameters in document WO 2020 / 244971 A1.

The transparency of the material of the one-piece base structure typically refers to a transparency in an infrared (IR) - light range, in particular a near-IR light range, and/or a visible light range. In particular, the substantially transparent material of the one-piece base structure is typically substantially transparent in an IR-light range, in particular a near-IR light range, and/or for light in a visible range.

Further, the substantially transparent material of the one-piece base structure is typically a solidified material, in particular a respective (cured) silicone or plastic.

This may facilitate manufacturing because the cameras as well as optional light sources may substantially or even completely be embedded in the material.

Further, using a substantially transparent and typically substantially non-reflective (e.g. a matt surface) material (in the visible light range) for the one-piece base structure facilitates reducing or even avoiding any (noticeable) obstruction of the visual field of a user wearing the head-wearable device complemented with the camera module.

The typically watertight camera module may, in particular, be manufactured by overmolding also allowing for forming particularly thin layers overlaying the camera connecting structure, in particular of parts thereof that are arranged (typically embedded) in the first leg portion and the second leg portion allowing for a particularly lightweight and/or unobtrusive camera module, the camera objectives, and/or the optional light sources for illuminating the user's eyes.

Accordingly, the camera connecting structure (typically including the cameras) is typically molded into (cast in) the one-piece base structure.

Manufacturing the camera module by overmolding also allows to long term stably embed the first eye camera, the second eye camera, and the scene camera at least partly in the one-piece base structure with defined camera poses, in a reproducible, cost-effective manner also ensuring water tightness.

At least one of, typically all of the first eye camera, the second eye camera, and the scene camera may be mechanically and electrically connected to the camera connecting structure.

Further, the camera connecting structure is typically at least partially flexible. This may facilitate manufacturing the camera module in a mold providing fixation structures for the cameras during molding. This is explained in more detail below.

The camera module overmold material may also not be substantially stiff but allow elastic deformations of parts of the camera module during handling. When installed into the support structure, the camera module may return to its original shape.

The camera connecting structure (inside the camera module) may include a circuit board, more typically a respective circuit board for each of the first eye camera, the second eye camera, and the scene camera.

The camera connecting structure (inside the camera module) may in addition include a further circuit board for receiving respective images (image data) from each of the first eye camera, the second eye camera, and the scene camera. The further circuit board may be equipped with electronic components to control image recording, forward, preprocess and/or even process the received image data.

The further circuit board may form or be equipped with a controller providing desired control and/or image processing functionality.

The further circuit board and the controller, respectively, are typically completely embedded within the one-piece base structure, and may be arranged in the upper portion, typically above the scene camera and in an uppermost part of the one-piece base structure, respectively.

The scene camera is typically also arranged in the upper portion of the camera module and the one-piece base structure, respectively.

The controller may be configured for at least one of:
- receiving control commands via an electric connector (plug or socket) of the camera connecting structure;
- triggering a respective image or video recording of the scene camera, the first eye camera and/or the second eye camera;
- distributing power to or between cameras and/or light sources;
- compressing a scene image, a first eye image and/or a second eye image;
- determining a gaze-related parameter of a user based on first and/or second eye image(s);
- pre-processing a scene image received from the scene camera, a first eye image received from the first eye camera, and/or a second eye image received from the second eye camera;
- forming a dataset comprising the scene image, the first eye image, the second eye image, the pre-processed scene image, the pre-processed first eye image, the pre-processed second eye image and/or a time stamp; and
- sending the dataset to the electric connector, in particular as network packets and/or an USB packets.

To provide a desired flexibility during manufacturing, a respective wire connection between the circuit boards may be used.

Alternatively or in addition, the camera connecting structure may be implemented and/or include one or more flexible circuit boards, in particular a flex PCB or a rigid-flex PCB.

The base structure is typically, at least in a lower portion, shaped to partly surround a nose of the user, in particular a nasal bridge of the user's nose, and at least substantially mirror symmetric with respect to a (virtual) central plane of at least the lower portion typically including two leg portions.

In particular, the lower portion typically includes a first (left) leg portion and a second (right) leg portion which are at least substantially mirror-symmetric with respect to the symmetry plane.

The camera module is typically formed such that the first leg portion and the second leg portion are spaced apart from at least one of, typically both of the user and the support structure when the user is wearing the head-wearable eye tracking device.

Further, the first eye camera may be arranged on and/or in the first leg portion, and the second eye camera may be arranged on and/or in the second leg portion.

Typically, at least one of a first angle between an optical axis of the first eye camera and the (vertical) symmetry plane, and a second angle between an optical axis of the second eye camera and the symmetry plane is in a range from about 147° to 135° (or -33° to about -45°), more typically about 141° (or -39°), i.e. 141°+/- 6° (or -39°+/- 6°). Further, at least one of a third angle between the optical axis of the first eye camera and a (horizontal) plane perpendicular to the (vertical) symmetry plane, and a fourth angle between the optical axis of the second eye camera and this plane is about 20°+/- 6°.Accordingly, an optimal view of the eye cameras onto an eyeball of the user is enabled.

Furthermore, the first angle may at least substantially correspond to the second angle. Likewise, the third angle may at least substantially correspond to the fourth angle.

The one-piece base structure typically also provides an outer surface of the camera module. Thus, the one-piece base structure, which is in the following also referred to as base structure for short, may not only provide supporting functionality but also provides the function of a housing for protecting the included (embedded) components.

Typically, the outer surface of the one-piece base structure is at least substantially mirror symmetric with respect to the symmetry plane.

Further, the scene camera is typically at least substantially centred with respect to the symmetry plane. An optical axis of the scene camera may at least substantially be arranged in the symmetry plane, or at least close to the (central) symmetry plane and/ or close to (expected) eye midpoint of the user. This facilitates a compact design. Furthermore, the influence of parallax error for gaze prediction may be significantly reduced this way.

Likewise, the first eye camera and the second eye camera are typically arranged at least substantially mirror-symmetrically with respect to the symmetry plane.

Placing the eye camera(s) close to the (central) symmetry plane also facilitates a comparatively compact camera module.

The camera module may fit into an enveloping cuboid with dimensions of at most about 3 cm x 5 cm x 5 cm or even at most about 2 cm x 4 cm x 4.5 cm.

A first distance between the first eye camera and the symmetry plane may be at most about 20 mm. Further, a second distance between the second eye camera and the symmetry plane at least substantially corresponds to the first distance and/or is at most about 20 mm.

An absolute difference between the first distance and the second distance may be at most about 1 mm, more typically at most about 0.5 mm or even 0.2 mm.

At least one of the first distance and the second distance may be at most about 15 mm, at most about 14 mm, or even at most about 12 mm.

When the camera module is attached to the support structure of the head-wearable device, the field of view of the wearer may not be occluded, at least not discernible for the wearer. Note that an obstruction of the visual field of the user may essentially not be noticeable by the user since the human mind mostly ignores any obstruction in the nose area of the face, because the nose itself forms a permanent obstruction of the visual field.

The camera module is typically attached to the central portion so that relative camera poses of the first and second eye cameras remain at least substantially fixed even when the central portion of the support structure is deformed under normal wearing conditions.

For this purpose, the camera module may provide a fastenings means typically fitting with a fastener and arranged at least close to the symmetry plane.

The camera module may include one, typically two fastening means for fastening the one-piece base structure at the support structure and/or releasably attaching the one-piece base to the support structure of the head-wearable device, in particular two respective mechanical or magnetic fastening means.

The one or more fastening means may be arranged next to an optical entrance of the scene camera, e.g. an objective lens of the scene camera.

The one or more mechanical fastening means may e.g. be implemented as (through) holes in the base structure (to allow screws as fasteners).

The camera module may be removably attached with screws, snaps or magnets to the supporting structure of the head-wearable device. The connection of the camera module to the support structure may be made such that flexing and bending of the support structure (e.g. a frame) does not or almost not bend or flex the camera module. Mechanical decoupling may be at least facilitated or even fully achieved by one or more fasteners being concentrated in a comparatively small central area of the support structure rather than spread across an area of the support structure that may be subject to bending and flexing. Furthermore, mechanical decoupling may be facilitated or even fully achieved because the camera module arms, in particular in the area of the eye cameras are not (directly) connected to the supporting structure.

Instead of directly connecting to the supporting structure, the camera module may connect to an interposing carrier. This optional interposing carrier may further facilitate mechanical decoupling. Typically, the carrier is attached to the central portion of the support structure permanently. In these embodiments, the camera module may be removably attached with screws, snaps or magnets to the carrier that may be screwed and/or glued to the central portion.

Typically, a distance between the two mechanical fastening means is at most about 15 mm or even 10 mm, or even only 5 mm.

This facilitates reducing any transmission of deformations between the support structure of the head-wearable device and the camera module.

Typically, the first eye camera, the second eye camera, and the scene camera are mechanically and electrically connected to the camera connecting structure.

The camera connecting structure may include a circuit board, more typically a respective circuit board for each of the first eye camera, the second eye camera, and the scene camera.

Typically, a further circuit board typically equipped with a controller and/or configured for receiving respective images from each of the first eye camera, the second eye camera, and the scene camera is provided, in particular in an uppermost part and above the scene camera, respectively.

To facilitate manufacturing, the camera connecting structure may be at least partially flexible.

For this purpose, a wire connection may be provided between the circuit boards.

Alternatively or in addition, the camera connecting structure may be implemented as and/or include a flexible circuit board, in particular a flex PCB or a rigid-flex PCB.

According to an embodiment of a head-wearable eye tracking device, the head-wearable eye tracking device includes a support structure comprising a central portion which is, when the head-wearable eye tracking device is worn by a user, arranged closest to and/or on a nose of the user, and a camera module as explained herein which is fastened to the central portion so that the first leg portion and the second leg portion camera module are at least substantially mechanically decoupled from the support structure. Accordingly, (eye) camera poses are not substantially affected by deformation / bending of the support structure.

This may be achieved by a carrier interposed between the support structure and the camera module, symmetrically attaching the carrier and/or the camera module to (the central portion of) the support structure (in an upper part and/or with respect to the scene camera), and/or by shaping the camera module (and the central portion) so that the first leg portion and the second leg portion are spaced apart from the user (also to avoid deflection of the respective leg portion that may result from contact with the user's skin) and/or the support structure when the user is wearing the head-wearable eye tracking device.

Typically, the central portion is configured to provide (in particular shaped in a lower part as) a nose bridge portion of the user's nose.

In this regard it is noted that, not only for reasons of high wearing comfort, mechanical decoupling of the eye imaging components and the head-wearable device is preferred compared to making the structures of the head-wearable device stiffer.

According to an embodiment, the head-wearable eye tracking device includes a support structure comprising a central portion which is, when the head-wearable eye tracking device is worn by a user, arranged closest to and/or on a nose of the user, and/or provides a nose-bridge portion, and a camera module including a one-piece base structure with an upper portion, a first leg portion, and a second leg portion. A first eye camera is arranged in and/or on the first leg portion, a second eye camera is arranged in and/or on the second leg portion, and a scene camera is arranged in and/or on the upper portion. The camera module is fastened to the central portion in an at least substantially mirror symmetric way with respect to a symmetry plane of at least one of, typically both of the support structure and the camera module (or even the head-wearable eye tracking device), an optical axis of the scene camera being at least substantially parallel to the symmetry plane and/or arranged within the symmetry plane. Typically, two fastening means arranged mirror-symmetric with respect to the symmetry plane are used.

Alternatively or in addition, a carrier is mechanically connected with and arranged between the upper portion of the one-piece base structure and the central portion of the support structure, and is configured to reduce a transmission of a deformation of the central portion of the support structure to the upper portion of the camera module.

Due to the interposed carrier, deforming of the upper portion of the camera module and thus of the whole camera module due to a deformation of the central portion, which may be due to external loads acting on the support structure and/or changes in temperature, is at least reduced. In particular, the impact of any deformation of the support structure, for example a bending of the support structure such as a spectacle frame, on the relative camera poses may also be at least reduced. This allows for also high accuracy under varying conditions, and may in particular be advantageous if calibration-free or hardware-calibrated eye tracking is desired.

Typically, the carrier is mechanically connected with and arranged between the upper portion and the central portion for at least reducing a deformation of the upper portion when the central portion is deformed (under stress), in particular due to external loads acting on the central portion of the support structure such as bending and/or torsional forces which may, for example, be transmitted through spectacle temples.

The carrier is typically mechanically connected with and arranged between the upper portion and the central portion to reduce transmitting at least one of, typically all of a (mechanical) tension, a (mechanical) compression, a bending force and a torque.

The camera module may be any of the camera modules as explained herein and/or a camera module manufactured as explained herein.

The carrier may be releasably connected with the upper portion of the one-piece base structure and the central portion of the support structure.

Further, the carrier may include an at least substantially central trough hole for the scene camera. Alternatively, the carrier may have a sufficiently transparent region for the optical entrance of the scene camera.

The carrier may be fastened to the central portion in a mirror symmetric way with respect to the at least substantially central trough hole and the transparent region, respectively.

Further, the carrier may be implemented as a circuit board, in particular a PCB.

Typically, a plug-socket connection is provided between the camera module and the carrier or the camera module and central portion of the head-wearable device (in embodiments without the carrier). In particular, two respective plug-socket connections, which are arranged mirror symmetric with respect to the symmetry planes of the device, the camera module and/or the carrier, and a common the symmetry plane in the assembled state, may be used for the connection.

The plug-socket connection(s) typically includes (pairs of) one or more spring-loaded pins, in particular pairs two or three spring-loaded pins.

Furthermore, the head-wearable eye-tracking device may include an external electric connector for power supply and/or data exchange (also referred to as second electric connector), and an internal wiring electrically connecting the second electric connector with an internal electric connector (also referred to as first electric connector) and/or the plug-socket connection(s).

The second electric connector may be used for power supply from and/or data exchange with a companion computing device.

The second electric connector may be a USB-connector such as an USB-C-connector. However, the second electric connector may also be a connector for another external computer bus, in particular a computer bus and power connector such as a Thunderbolt-connector (Thunderbolt 3 uses USB-C connectors) or a Lightning connector (typically supporting the USB-protocol) or even an Ethernet-connector (Power over Ethernet).

Further, the second electric connector may be arranged at a dorsal end of a frame of the head-wearable device providing the support structure, and/or of a temple of the head-wearable device, respectively. Thereby a connection can be established in an unobtrusive way and wearing comfort may even be increased.

Via the second electric connector (and the wired connection within the head-wearable device), the camera module may be connected with a (mobile) computing companion device such as smartphone, a tablet or the like, supplied with electric power from the companion device and even controlled by the companion device, for example by an app running on the companion device.

The head-wearable device may be a spectacle device, a pilot visor helmet, an AR head-wearable display, a VR head-wearable display or a goggles, for example a skiing-goggles, a swimming-goggles, a sports helmet, a head-band structure or a welding protective googles.

In embodiments referring to spectacle devices, the frame may include a first frame portion at least partly surrounding a first ocular opening, a second frame portion at least partly surrounding a second ocular opening, and the central portion may form (or be formed by) a bridge portion mechanically connecting the first frame portion and the second frame portion

In other words, the head-wearable device may include a frame including a first frame portion at least partly surrounding a first ocular opening, a second frame portion at least partly surrounding a second ocular opening, a bridge portion mechanically connecting the first frame portion and the second frame portion, and a first electric connector arranged on and/or in the bridge portion.

The frame of the head-wearable device may include a passage opening for receiving a protruding portion of the scene camera of the camera module as explained herein.

According to an embodiment of a method for manufacturing a camera module for a head-wearable device, the method includes providing a camera connecting structure equipped with a first eye camera and a second eye camera, providing a mold comprising a first fixation structure for the first eye camera and a second fixation structure for the second eye camera, arranging the connecting structure in the mold so that the first eye camera is arranged in and/or at the first fixation structure, and the second eye camera is arranged in and/or at the second fixation structure, filling the mold with a material, and solidifying the material to at least substantially fix a positional relationship and a orientational relationship of the first eye camera and the second eye camera with respect to each other.

Accordingly, the (relative) camera poses of the camera module may be set precisely defined in the mold, and long-term stably be fixed by curing the material filled into the mold.

Solidifying may include and/or be achieved by curing of the material, in particular chemical or thermal curing.

As already explained above, the camera connecting structure itself is typically at least partly flexible to facilitate arranging the cameras in the mold in the desired positions and orientations temporarily (during molding) fixed by respective fixation structures.

The camera connecting structure may in particular include an at least partly flexible board such as a flex PCB or a rigid-flex PCB.

The camera connecting structure is typically additionally provided with a scene camera.

However, with the molding process described herein, it is also possible to manufacture a camera module without a scene camera.

Likewise, it is also to manufacture a camera module without a scene camera and one eye camera only with the molding process described herein.

Further, the camera connecting structure may be provided with a first light source for illuminating a field of view of the first eye camera, and/or a second light source for illuminating a field of view of the second eye camera, in particular with a respective (infrared) LED.

The mold may include a third fixation structure for the scene camera and/or a recess for partly accommodating the scene camera in the mold.

Accordingly, arranging the connecting structure in the mold may include arranging the scene camera in and/or at the third fixation structure of the mold, in the recess and/or on a sealing support of the mold for the scene camera, in particular on and/or at a respective sealing support for an optical entrance of the scene camera.

Separate fixations structures for the optional (infrared) light sources are typically not required.

However, if the poses of those light sources play a role in determining gaze-related parameters, as for example in glint-based eye tracking systems, the same manufacturing strategies as described herein using fixation receptacles for eye cameras can be used for (infrared) light sources.

The first fixation structure is typically implemented as a first receptacle for a portion of the first eye camera.

Likewise, the second fixation structure is typically implemented as a second receptacle for a portion of the second eye camera.

The first receptacle may at least substantially positively fit with a housing of the first eye camera next to an optical entrance of the first eye camera.

Likewise, the second fixation structure may at least substantially positively fit with a housing of the second eye camera next to an optical entrance of the second eye camera.

Typically, the first fixation structure and/or the second fixation structure are implemented as a respective recess or hole in a wall of the mold.

The connecting structure is typically arranged in the mold so that the cameras' poses are fixed in the mold, for example so that a portion of the first eye camera is arranged in the first receptacle and a portion of the second eye camera is arranged in the second receptacle.

The material used for molding is typically, at least in the solidified state, transparent.

This facilitate manufacturing a watertight camera module with the eye cameras (as well as the optional light sources) being substantially or even completely embedded. Note that even the respective optical camera entrance may be covered with a thin layer of the solidified transparent material.

The material may be a plastic or a silicone.

The manufactured camera module is typically shaped to partly surround a nose of the user but not shaped as a nose bridge portion but rather spaced apart from the user's face, in particular the user's nose when wearing the head-wearable eye tracking device, and/or at least substantially mirror symmetric with respect to a (virtual, central) symmetry plane.

In the following, the symmetry plane is also referred to as vertical plane.

The term "at least substantially mirror symmetric with respect to a plane" as used within specification intends to describe that at least the outer surface or boundaries of two elements or objects are mirror symmetric with respect to the plane with an accuracy which is typically achievable with the materials and manufacturing methods used, in particular with an accuracy of at least 5 % or even at least 2 % or 1%, at least on average, and/or that two (virtual) parts of an outer surface or boundary of one element or object are mirror symmetric with respect to the plane with an accuracy of at least 5% or even at least 2 % or 1%, at least on average. In particular, a centre of gravity of the outer surfaces lies within the plane or is at most about 1 mm or even at most about 0.5 mm, more typically at most about 0.2 mm spaced apart from the plane.

The term that "a second distance at least substantially corresponds to the first distance" as used within specification intends to describe that a relative difference between the first distance and the second distance is at most about 5%, more typically at most about 2 % or even 1%.

Those skilled in the art will recognize additional features and advantages upon reading the following detailed description, and upon viewing the accompanying drawings.

### BRIEF DESCRIPTION OF THE DRAWINGS

The components in the figures are not necessarily to scale, instead emphasis being placed upon illustrating the principles of the invention. Moreover, in the figures, like reference numerals designate corresponding parts. In the drawings:
Fig. 1A illustrates a front view of a camera module for attachably complementing a support structure of a head-wearable device of a user according to an embodiment;
Fig. 1B illustrates a back view of the camera module shown in Fig. 1A according to an embodiment;
Fig. 1C illustrates a top view of the camera module shown in Fig. 1A according to an embodiment;
Fig. 1D illustrates a lateral view of the camera module shown in Fig. 1A according to an embodiment;
Fig. 2A illustrates a front view of a camera module for attachably complementing a support structure of a head-wearable device of a user according to an embodiment;
Fig. 2B illustrates another front view of the camera module shown in Fig. 2A and a carrier according to an embodiment;
Fig. 2C illustrates a cross-sectional view of the camera module and carrier shown in Fig. 2B according to an embodiment;
Fig. 2D illustrates a back view of the camera module shown in Fig. 2A according to an embodiment;
Fig. 2E illustrates a side view of the camera module and carrier shown in Fig. 2B according to an embodiment;
Fig. 2F illustrates a back view of an embedded camera connecting structure of the camera module shown in Fig. 2A according to an embodiment;
Fig. 3A illustrates a perspective view of a head-wearable device and the camera module shown in Fig. 2A that may be attached to the head-wearable device to form a head-wearable eye tracking device according to an embodiment;
Fig. 3B illustrates a perspective view of the head-wearable device shown in Fig. 3A complemented with the camera module shown in Fig. 3A according to an embodiment to form a head-wearable eye tracking device;
Fig. 4A illustrates, in an exploded top view, bending states of the head-wearable eye tracking device shown in Fig. 3B according to an embodiment;
Fig. 4B illustrates, in a top view, bending states of a head-wearable eye tracking device with integrated eye cameras;
Fig. 5A is a flow chart of a method for manufacturing a camera module for a head-wearable device according to embodiments; and
Fig. 5B and Fig. 6 illustrate a method for manufacturing a camera module and the manufactured camera module in respective side views according to embodiments.

For sake of clarity, the Figures are provided with a respective Cartesian coordinate system x, y, z typically representing a respective eye tracking module coordinate system and scene camera coordinate system, respectively.

### DETAILED DESCRIPTION

In the following Detailed Description, reference is made to the accompanying drawings, which form a part hereof, and in which is shown by way of illustration specific embodiments in which the invention may be practiced. In this regard, directional terminology, such as "top," "bottom," "front," "back," "leading," "trailing," etc., is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

Points and directions may be specified within the scene camera images, an eye camera coordinate system, a scene camera coordinate system, an eye tracking module coordinate system, a head coordinate system, a world coordinate system and/or any other suitable coordinate system.

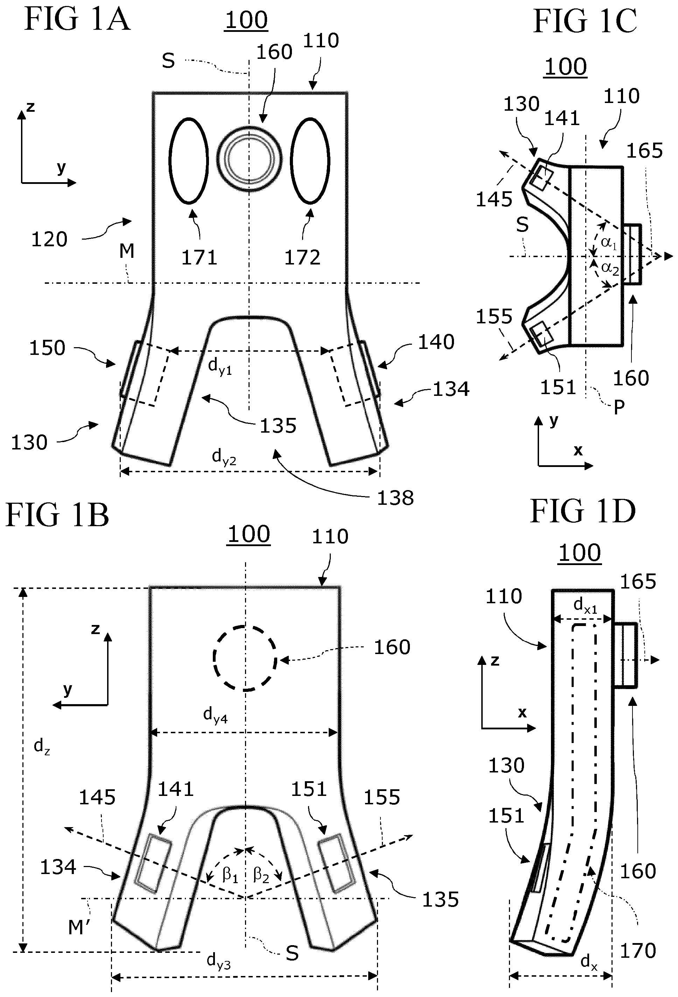

With reference to Figures 1A to 1D, an embodiment of a camera module 100 for complementing a support structure of an electronic head-wearable device of a user is explained.

As shown in Fig. 1A illustrating a front view of camera module 100, a one-piece base structure 110 of module 100 may be mirror symmetric with respect to a virtual central symmetry plane S. Further, a lower portion 130 of base structure 110 may have a left leg portion 134 and a right portion leg portion 135 formed such that a recess 138 for a user's nose is formed in lower portion 130.

In the exemplary embodiment, one-piece base structure 110 accommodates in an upper portion 120 a scene camera 160 arranged in plane S, and a two-part electric connector 171, 172, which is typically implemented as a two-part electro-mechanical connector, and, in the lower portion 130, a left (first) eye camera 140 and a right (second) eye camera 150.

More particular, the left leg portion 134 accommodates the left eye camera 140, and the right leg portion 135 accommodates the right eye camera 150.

The left eye camera 140 and the right eye camera 150 are arranged mirror symmetric to each other with respect to central plane S. Further, both the scene camera 160 and the two parts of the electric connector 171, 172 are mirror symmetric with respect to central plane S.

In front view and in a projection onto one or even two (orthogonal) planes P, M perpendicular to the symmetry plane S and the optical axis 165 (see also Fig. 1C illustrating a top view of module 100), respectively, the scene camera 160 is arranged between the two parts of electric connector 171, 172. Typically, their centres lie on a line in the respective view/projection. However, the optical axis 165 may also be tilted with respect to plane M, for example by up to 10° or even 20°.

For the sake of clarity, not the eye cameras 140, 150 but recesses 141, 151 in one-piece base structure 110 for accommodating the eye cameras 140, 150 are illustrated in figures 1B to 1D. For the same reason, neither electrical or mechanical contacts typically arranged inside one-piece structure 110 are shown in figures 1B to 1D nor is the electric connector 171, 172 shown in figures 1B to 1D. In Fig. 1A, eye cameras 140, 150 are indicated as slightly protruding from the base structure 110, however they can be embodied completely integrated into the base structure, with no protruding parts.

A first distance between the (first) left eye camera 140 and the symmetry plane S is typically at most 20 mm, at least in front view and in the projection onto the plane P, respectively. Likewise, a second distance between the (second) right eye camera 150 and the symmetry plane S is typically at most 20 mm, at least in front view and in the projection onto the plane P, respectively. In the exemplary embodiment, the eye cameras 140, 150 are mirror-symmetric with respect to symmetry plane S. Accordingly, the first distance matches the second distance. The first and second distances may be respective minimum distances (each d_{y1}/2 in the exemplary embodiment) or more typically respective maximum distances (each d_{y2}/2 in the exemplary embodiment). Said first and second distances may also measure the respective distance between an (optical) center of the eye camera 140, 150 and the symmetry plane S, in the direction perpendicular to plane S. Further, said camera centers may for example be halfway between d_{y1}/2 and d_{y2}/2.

In a projection onto a plane M which is perpendicular to the symmetry plane S and the plane P and in top view, respectively, scene camera 160 is spaced apart from the parts 171, 172 of electric connector 171, 172.

As illustrated in figure 1C, a first angle α₁ between an optical axis 145 of left eye camera 140 and symmetry plane S, and a second angle α₂ between an optical axis 155 of right eye camera 150 and symmetry plane S may be about 141° (or -39°).

Furthermore, the first angle α₁ may corresponds to the second angle α₂.

As illustrated in figure 1B, a second angle 90°-β₁ between optical axis 145 of left eye camera 140 and a plane M' (or plane M), which is parallel to the x-y plane as indicated by the coordinate systems and perpendicular to symmetry plane S, and a fourth angle 90°-β₂ between optical axis 155 of right eye camera 150 and plane M' (or plane M) may be both about 20° (or -160°), and/or at least substantially equal .

The total height d_{z} of one-piece base structure 110 (extension of modular base structure 110 in a direction perpendicular to plane M, in z-direction) may be in a range from about 2.5 cm to about 5 cm, more typically in a range from about 3 cm to about 4.5 cm.

The widths of one-piece base structure 110, i.e. the extension of base structure 110 in a direction perpendicular to the symmetry plane S typically varies as function of the height (z) and is typically in a range from about 2 cm to 5 cm, more typically in a range from about 2 cm to about 4 cm.

As illustrated in figures 1A, 1B, the width dy₄ of upper portion 120 may be substantially constant and/or lower than the maximum width dy₃ of lower portion 130, for example by a factor of 1.1 to 1.4.

As illustrated in figures 1A to 1D, legs (leg portions) 134, 135 are typically bent.

Alternatively or in addition, the depth dₓ₁ (extension in direction of optical axis 165 of scene camera 160, which in the example shown is parallel to the x-direction) of one-piece base structure 110 may vary as function of height.

The depth dₓ₁ may be in a range from about 1 cm to about 2 cm, more typically in a range from about 1 cm to 1.7 cm.

The total extension dₓ in x-direction may be in a range from about 1.2 cm to about 3 cm, more typically in a range from about 1.5 cm to 2 cm.

As illustrated in figures 1D, the scene camera 160 may protrude from one-piece base structure 110.

However, the scene camera 160 and/or the electric connector 171, 172 may also be arranged within one-piece base structure 110, i.e. such that they are accessible from the outside but do not protrude from the base structure.

As illustrated in figures 1D, a camera connecting structure 170 for electrically connecting scene camera 160 and eye cameras 140, 150 may be embedded in one-piece base structure 110 and connected with the cameras 140, 150, 160.

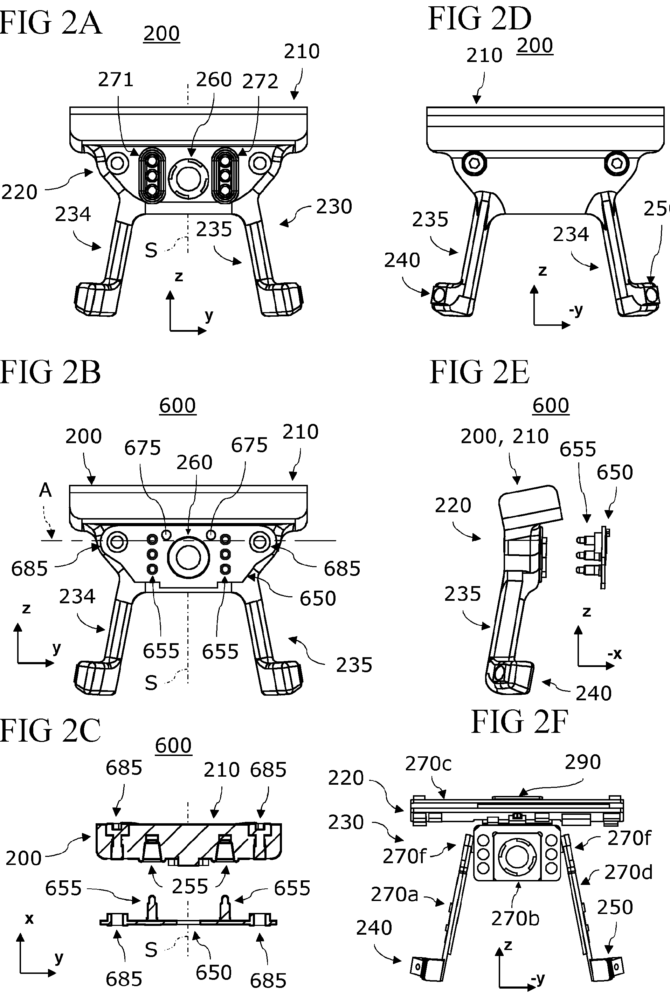

Fig. 2A illustrates a front view of a camera module 200 for attachably complementing a support structure of a head-wearable device of a user.

Camera module 200 is typically similar to camera module 100 explained above with regard to figures 1A-1D and also has substantially transparent one-piece base structure 210 with a lower portion 230 with two leg portions 234, 235, but is illustrated in more detail.

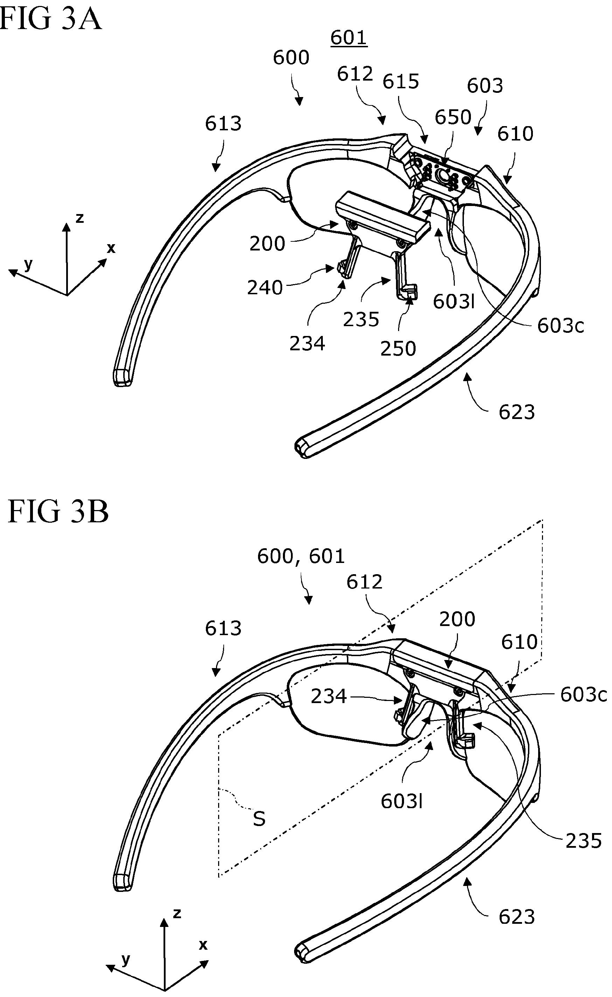

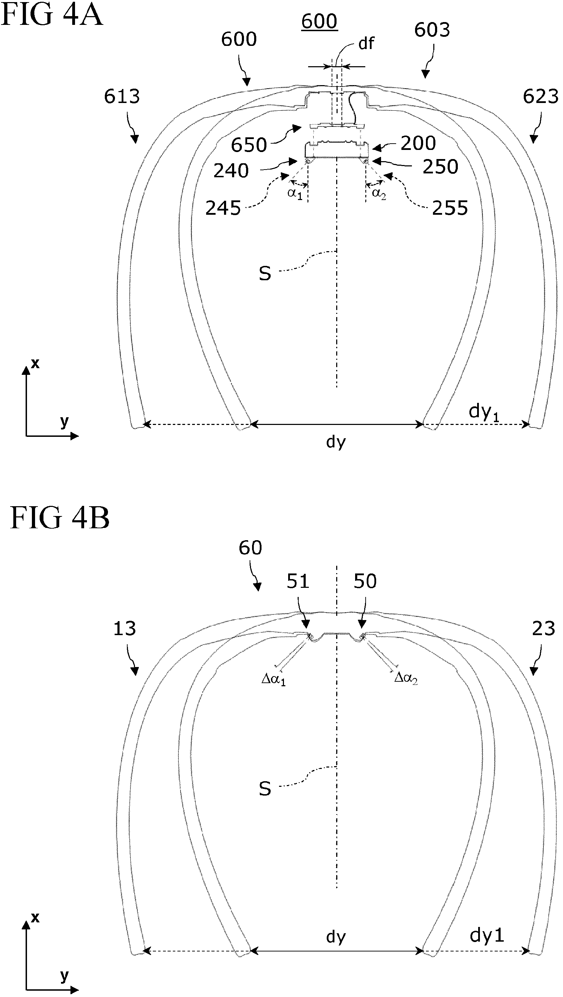

This applies in particular to the exemplary two-part electric-mechanical connector 271, 272 formed in upper portion 220 left and right of scene camera 260 as respective socket with three electrical contacts 255 (shown in Figs. 3B, 3C, 3E in different views) for typically spring-loaded pins 655 of a carrier 650 of a head-wearable device 600 (shown in Figs. 4A, 4B) to be complemented with camera module 200.

While Fig. 2B is also a front view of camera module 200 including carrier 650 hiding connector 271, 27, Fig. 2C shows a cross-sectional view along line A in Fig. 2B, Fig. 2D is a back view, and Fig. 2E is a side view of camera module 200 and a carrier 650, respectively.

As indicated in Fig. 2B by elements 675 that may e.g. represent holes or screws, carrier 650 may be (typically permanently) fastened with the central portion 603 of the support structure by two fastening means arranged mirror-symmetric with respect to symmetry plane S, typically close to symmetry plane S, e.g. at a distance of at most 4 mm or even at most 3 mm, and/or above and/or close to the scene camera 260. This allows for a particularly stable and mechanically decoupled fastening of camera module 200 to the support structure of head-wearable device 600.

Alternatively, or in addition, an adhesive (glued) joint may be formed between carrier 650 and central portion 603.

As indicated by reference numerals 685, carrier 650 and camera module 200 may be connected via a screw connection.

Fig. 2F illustrates a back view of a camera connecting structure 370a-f which will be embedded in one-piece base structure 210 of camera module 200 in the course of the manufacturing process according to embodiments.

In the exemplary embodiment, camera connecting structure 370a-f includes in lower portion 230 a circuit board 210a equipped with left eye camera 240, a circuit board 210d equipped with right eye camera 250, and a central circuit board 270b with a central through hole for the scene camera (objective) arranged centrally between the six electrical contacts (255).

Each circuit board 210a, 270d is, in a respective region 270f, flexibly (bendably) connected with circuit board 270b.

Further, circuit board 270b is connected with a further circuit board 270c arranged in upper portion 220 and equipped with one or more components such as an IC implementing a controller 290 of camera module 200.

Controller 290 may be functionally connected with cameras 240, 250, 260, in particular in electric connection with cameras 240, 250, 260.

Controller 290 may be configured to control cameras 240, 250, 260.

Further, controller 290 may be configured to process images received from cameras 240, 250, 260.

For example, controller 290 may be configured to calculate one or more gaze-related parameters of a user based on the received images.

Fig. 3A illustrates a perspective view of a head-wearable device 600 implemented as spectacle device, and the camera module 200 as shown in Fig. 3A that may be attached to head-wearable device 600 to form a head-wearable eye tracking device 601.

In the exemplary embodiment, head-wearable device 600 is implemented as spectacles device. Accordingly, a frame 610 of spectacles device 600 forms a support structure of spectacles device 600. Frame 610 has a front portion 612 only partly surrounding a left ocular opening and a right ocular opening. A central portion 603 of front portion 612 forms a bridge portion arranged between the ocular openings and spectacles lenses, respectively. Further, a left temple 613 and a right temple 623 are attached to front portion 612.

Furthermore, a passage opening for the (hidden) scene camera of eye tracking module 200 and the field of view (FOV) of the scene camera, respectively, is formed in bridge portion 603.

Likewise, carrier 650 accommodated in bridge portion (central portion) 603 and arranged on the wearer-side of bridge portion 603 has a through hole for the scene camera and six exemplary spring-loaded pins of two plugs for (fitting with) the two-part (first) electric socket (connector) 271, 272 shown in Fig. 2A.

Eye tracking module 200 is shaped at least substantially complementary to central (bridge) portion 603 of frame 610 of head-wearable device 600, more particular to fit into a recess or opening 615 of central portion 603 with attached carrier 650 of head-wearable device 600 (see also Figs. 2C, 2E).

In a lower part 6031, central portion 603 of frame 610 is formed as a nose-bridge portion. Accordingly, lower part 6031 has appropriately shaped contact surface 603c for the user's nose and the bridge of the user's nose, respectively. Contact surface 603c may also be considered as support surface of central portion 603 and frame 610, respectively.

A first nose pad and a second pad (not shown) may be attached to lower part 6031, but typically not to leg portions (camera arms) 234, 235. The first nose pad and/or the second nose pad may be adjustable and/or exchangeable attached to the lower part 6031.

A second electric connector (not shown) in electric contact with the first two-part electric connector of carrier 650 (via a not shown internal wiring) may be accommodated at the dorsal and of left or right temple 613, 623.

The second electric connector may be used for connecting with a companion device such as a smart phone or tablet. For example, the second electric connector may be a USB-connector.

Fig. 3B illustrates a perspective view of head-wearable eye tracking device 601 including camera module 200 in assembled state. In the exemplary embodiment, both the first leg portion 234 and the second leg portion 235 are spaced apart from central portion 603 of frame 610 (and the user wearing eye tracking device 601). Accordingly, the (relative) camera poses remain at least substantially fixed under normal wearing/use conditions. And are at least largely independent of any deformation of frame 610 under these conditions, respectively.

As illustrated in Fig. 3B, symmetry plane S of module 200 may, in the mounted state, also represent a symmetry plane for frame 610.

Fig. 4A illustrates, in an exploded top view, two bending states of head-wearable eye tracking device 601 shown in Fig. 4B.

Due to the central fixation of camera module to the frame 610, optionally via carrier 650, the angle α₁ between and an optical axis 245 of left eye camera 240 and symmetry plane S, and a second angle α₂ between an optical axis 255 of right eye camera 250 and symmetry plane S, and, thus, the relative angle α₁ + α₂ between optical axes 245, 255 is substantially independent of flex of the head-wearable indicated by distance dy, dy₁ between the ends of the temples 613, 623, at least for typical distances dy, dy₁.

Different thereto, the corresponding angles typically vary substantially depending on the bending state of a head-wearable eye tracking devices 60 with integrated eye cameras as illustrated in Fig. 4B by the angle ranges Δα₁, Δα₂. This may have a substantial impact on accuracy of eye parameter determination.

In the illustrated embodiment, carrier 650 is fastened to central portion 603 with two screws in a mirror-symmetric way with respect to plane S and at a respective distance df/2 of 3.75 mm from plane S.

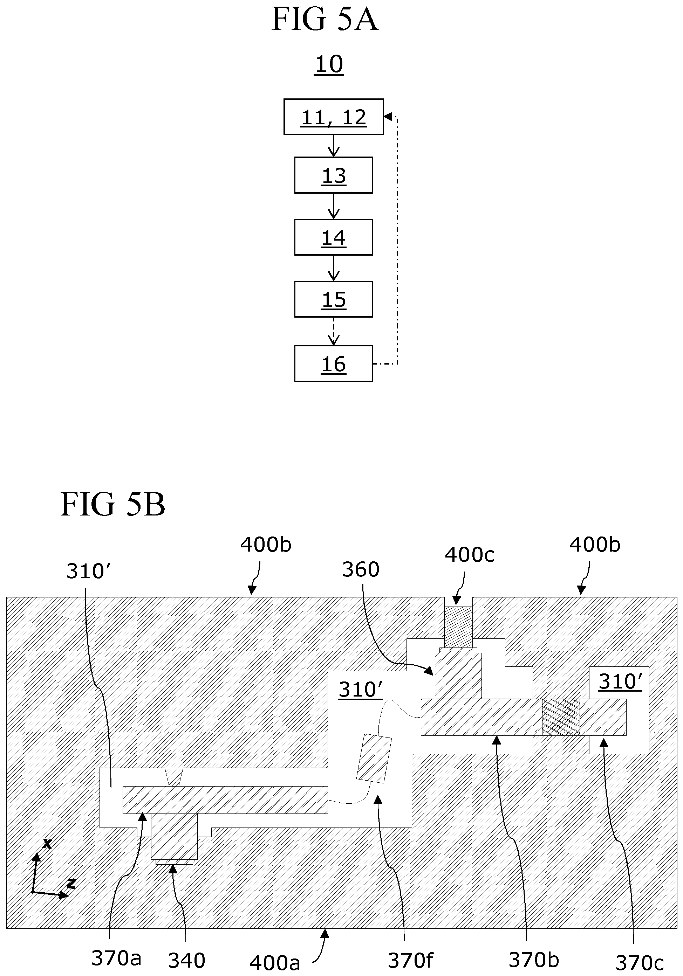

With regard to Fig. 5A to 6 methods for manufacturing a camera module and the manufactured camera module, respectively, are explained.

As shown in the flow chart of Fig. 5A, a method 10 for manufacturing a camera module for complementing a support structure of a head-wearable device, in particular a camera module as explained herein, method 10 may include providing a camera connecting structure assembled with a first eye camera, and a second eye camera, in a block 11, and providing a mold with a first fixation structure for the first eye camera and a second fixation structure for the second eye camera, in a block 12.

Thereafter, the connecting structure may be arranged in the mold so that the first eye camera is stably held by the first fixation structure, and the second eye camera is stably held by the second fixation structure, in a block 13.

Thereafter, the mold is, in a block 14, filled with a liquid material that can be solidified to from a long-term stable, substantially transparent and mechanically sufficiently stable material, in particular a respective silicone or plastic.

Thereafter, the material is solidified in a block 15.

Solidifying typically includes curing of the material, in particular chemical or thermal curing, and/or may be a two-stage process with a prolonged post-cure process.

Accordingly, a positional and orientational relationship of the first eye camera and the second eye camera with respect to each other may be at least substantially fixed and reproducibly obtained.

Thereafter, the manufactured camera module may be removed from the mold in a block 16, and method 10 may return to block 12 as indicated by the dashed-dotted arrow in Fig. 5A.

Thereafter, the manufactured camera module may be connected with a central portion of a support structure of a head-wearable eye device, typically via a plug-socket connection and/or a carrier arranged in between.

Typically, the camera connecting structure is additionally provided with a scene camera which is also stably held in the mold during filling and solidifying.

Fig. 5B shows a side view of an exemplary two-part mold 400a, 400b and a camera connecting structure 370a, 370b, 370c, 370f which is additionally provided with a scene camera 360, and which is arranged in mold 400a, 400b with its parts 400a, 400b arranged one above the other.

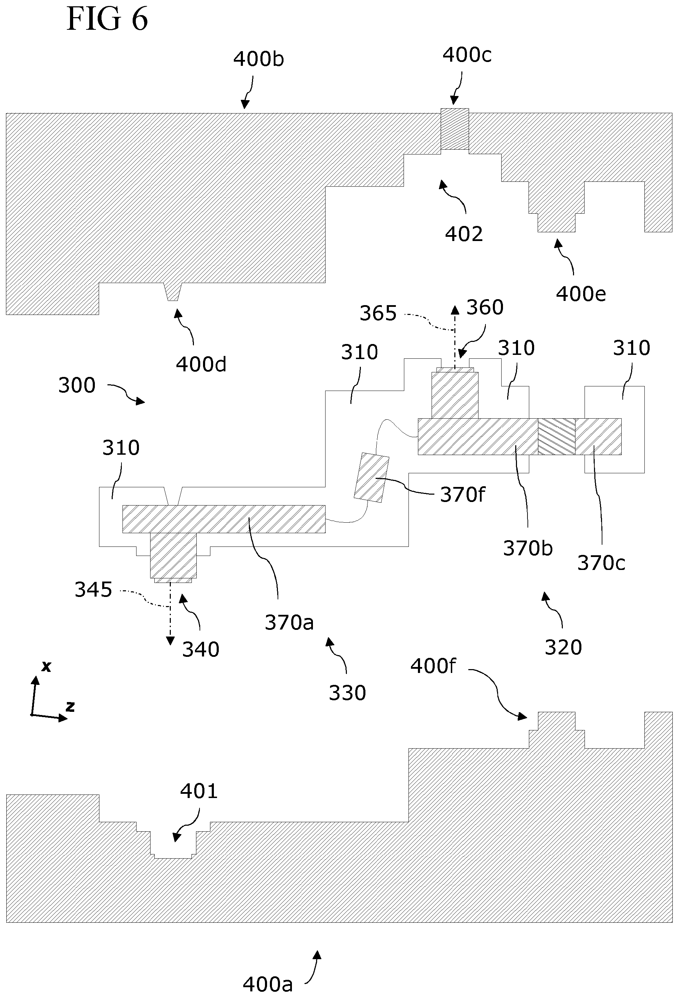

In the schematic side view of Fig. 5B, the typically provided second eye camera is hidden by the first eye camera 340. This also applies to Fig. 6 showing a corresponding side view after filling the voids 310' in mold 400a, 400b with a material, solidifying the material, and opening mold 400a, 400b to remove the manufactured camera module 300 with the camera connecting structure 370a-f being embedded in a one-piece base structure 310 formed in the mold (in the mold's void 310').

In the exemplary embodiment, camera connecting structure 370a, 370b, 370c, 370f is flexible in a connecting part or region 310f between a part 370a equipped with first eye camera 340 and a part 370b equipped with scene camera 360 (and likewise between a part 370b and a hidden part equipped with the second eye camera), but may be sufficiently stiff in the other parts, in particular part 310.

Accordingly, camera connecting structure 370a, 370b, 370c, 370f may be placed in lower part 400a which is followed by covering lower part 400a with upper part 400b, and optionally covering the optical entrance of scene camera 360 with a plug 400c if the objective of scene camera 360 is desired to be laterally covered by the material but not on top (at the lens), so that the camera poses are held during filling and curing.

This way, manufacturing tolerances and imperfections of the typically massproduced camera connecting structures 370a-f do not negatively impact the reproducibility of the camera poses of the final camera module, since all modules are produced using the same (single) highly accurate mold that tightly grips the cameras and thus precisely defines and reproduces their mutual poses.

In the exemplary embodiment, eye camera 340 is held by a void 401 in lower part 400a fitting with eye camera 340 next to the optical entrance of eye camera 340 and a protrusion 400d of the upper part 400b.

In the closed state of mold 400a, 400b shown in Fig. 5B, void 401 and protrusion 400d form a fixation structure for eye camera 340.

Void 401 and protrusion 400d may be centred with respect to each other and an optical axis 345 of eye camera 340, respectively.

Further, in the exemplary closed state of mold 400a, 400b, scene camera 360 is not held by void 402 of upper part 400b and a corresponding support structure of lower part 400a, which is also possible and generally preferred, but by a fixation structure 400e, 400f for the rigid parts 370a, 370c, e.g. a common PCB board 370b, 370c for the scene camera 360 and a controller of camera module 300.

In the exemplary embodiment, fixation structure 400e, 400f is formed by plugs that fit into a hole of common PCB board 370b, 370c from top and bottom, respectively.

While the manufacturing method is typically used for manufacturing camera modules with three cameras, it may also be used for manufacturing a camera module with only two cameras, i.e. with two eye cameras, or with one eye camera and one scene camera.

According to an embodiment a method for manufacturing a watertight camera module for complementing a head-wearable device, the method includes: providing a camera connecting structure equipped with at least two of, typically all of: a first eye camera for taking first images of at least a portion of a first eye of a user wearing the head-wearable eye tracking device formed by complementing the head-wearable device with the camera module, a second eye camera for taking second images of at least a portion of a second eye of the user wearing the head-wearable eye tracking device, and a scene camera for taking scene images of a visual field of the user wearing the head-wearable eye tracking device, and optionally a first light source for illuminating the first eye and/or a second light source for illuminating the second eye, in particular a respective (infrared) LED. The method further includes providing a mold, arranging the connecting structure in the mold so that the camera (s) is (are) kept stable (fixed) in terms of location and orientation in the mold, filling the mold with a material; and solidifying the material.

In a closed state, the mold may provide a respective fixation structure for the camera(s) and/or a rigid part of the camera connecting structure next to the respective camera.

Although various exemplary embodiments of the invention have been disclosed, it will be apparent to those skilled in the art that various changes and modifications can be made which will achieve some of the advantages of the invention without departing from the spirit and scope of the invention. It will be obvious to those reasonably skilled in the art that other components performing the same functions may be suitably substituted. It should be mentioned that features explained with reference to a specific figure may be combined with features of other figures, even in those cases in which this has not explicitly been mentioned. Such modifications to the inventive concept are intended to be covered by the appended claims.

Spatially relative terms such as "under", "below", "lower", "over", "upper" and the like are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

As used herein, the terms "having", "containing", "including", "comprising" and the like are open ended terms that indicate the presence of stated elements or features, but do not preclude additional elements or features. The articles "a", "an" and "the" are intended to include the plural as well as the singular, unless the context clearly indicates otherwise.

With the above range of variations and applications in mind, it should be understood that the present invention is not limited by the foregoing description, nor is it limited by the accompanying drawings. Instead, the present invention is limited only by the following claims.

### Reference numbers

- 10-16: method, method steps
- 100, 200: eye tracking module / add-on camera module
- 110, 210, 310: (water tight) one-piece base structure
- 120, 220, 320: upper portion of one-piece base structure / module housing
- 130, 230, 330: lower portion of one-piece base structure / module housing
- 134, 234: first/left leg
- 135, 235: second/right leg

- 138, 238: recess for a user's nose
- 140, 240, 340: first / left (eye) camera
- 141, 241: recess for first / left (eye) camera
- 145, 245, 345: optical axis of first/left (eye) camera
- 150, 250: second / right (eye) camera
- 155, 255: optical axis of /second/right (eye) camera
- 160, 260, 360: scene camera
- 165, 365: optical axis of scene camera
- 170, 270a-f: camera connecting structure
- 171, 172, 271, 272: two-part electric connector (plug/socket, electro-mechanical connector)
- 290: controller
- 370a-f: camera connecting structure
- 400a, 400b: mold
- 400c: sealing support (plug) for the scene camera
- 401: fixation structure / receptacle
- 402: recess
- 600: head-wearable device
- 601: head-wearable eye tracking device
- 603: central (nose bridge) portion of the head-wearable eye tracking device
- 610: support structure / (spectacles) body / frame
- 612: front portion of body/frame
- 613: first/left holder /temple (arm)
- 615: recess / opening in frame for eye tracking module / module housing
- 650: carrier
- 675, 685: fastening means / fastening

- S: middle/central/vertical/ symmetry plane of module/spectacles body
- P: projection plane, typically defined by the optical axis of the scene camera
- M: module plane, typically perpendicular to plane S and/or P

## Claims

1. A camera module (100, 200, 300) for complementing a support structure of a head-wearable device (600), in particular a respective frame (510, 610, 710) of the head-wearable device, to form a head-wearable eye tracking device (501, 601, 701), the camera module (100, 200, 300) comprising:
- a one-piece base structure (110, 210, 310) comprising an at least semi-transparent material, typically a substantially transparent material, and comprising an upper portion (120, 220, 320), a first leg portion (134, 234) and a second leg portion (135, 235);
- a camera connecting structure (170, 270a, 270b, 270c, 270d, 270f, 270f', 370a, 370b, 370c, 370f) embedded in the one-piece base structure (110, 210, 310);
- a first eye camera (140, 240, 340) connected with the camera connecting structure (170, 270a, 270b, 270c, 270d, 270f, 270f', 370a, 370b, 370c, 370f), and arranged in and/or on the first leg portion (134, 234);
- a second eye camera (150, 250) connected with the camera connecting structure (170, 270a, 270b, 270c, 270d, 270f, 270f', 370a, 370b, 370c, 370f), and arranged in and/or on the second leg portion (135, 235); and
- a scene camera (160, 260, 360) connected with the camera connecting structure (170, 270a, 270b, 270c, 270d, 270f, 270f', 370a, 370b, 370c, 370f), and arranged in and/or on the upper portion (120, 220, 320).

2. The camera module (100, 200, 300) of claim 1, wherein the camera module (100, 200, 300) is formed such that the first leg portion (134, 234) and the second leg portion (135, 235) are spaced apart from a user and/or the support structure when the user is wearing the head-wearable eye tracking device (600), wherein the camera module (100, 200, 300) is formed by overmolding, wherein the material is a cured material, wherein the camera connecting structure (170, 270a, 270b, 270c, 270d, 270f, 270f', 370a, 370b, 370c, 370f) is embedded in the one-piece base structure (110, 210, 310), wherein the one-piece base structure (110, 210, 310) is substantially transparent in an IR-light range, in particular a near-IR light range, and/or for light in a visible range, and/or wherein the one-piece base structure (110, 210, 310) comprises at least one of a silicone and a plastic.

3. The camera module (100, 200, 300) of any preceding claim, wherein at least one of the first eye camera (140, 240, 340), the second eye camera (150, 250), and the scene camera (160, 260, 360) is at least partly embedded in the one-piece base structure (110, 210, 310), wherein at least one of the first eye camera (140, 240, 340), the second eye camera (150, 250), and the scene camera (160, 260, 360) is arranged waterproof in the one-piece base structure (110, 210, 310), and/or wherein the camera module (100, 200, 300) is waterproof.

4. The camera module (100, 200, 300) of any preceding claim, wherein at least one of the first eye camera (140, 240, 340), the second eye camera (150, 250), and the scene camera (160, 260, 360) is mechanically and electrically connected to the camera connecting structure (170, 270a, 270b, 270c, 270d, 270f, 270f', 370a, 370b, 370c, 370f), wherein the camera connecting structure (170, 270a, 270b, 270c, 270d, 270f, 270f', 370a, 370b, 370c, 370f) is at least partially flexible, wherein the camera connecting structure (170, 270a, 270b, 270c, 270d, 270f, 270f', 370a, 370b, 370c, 370f) comprises a circuit board, more typically a respective circuit board (370a, 370b) for each of the first eye camera (140, 240, 340), the second eye camera (150, 250), and the scene camera (160, 260, 360), a further circuit board (370c) typically configured for receiving respective images from each of the first eye camera (140, 240, 340), the second eye camera (150, 250), and the scene camera (160, 260, 360), and a wire connection between the circuit boards (170, 270a, 270b, 270c, 270d, 270f, 270f', 370a, 370b, 370c, 370f), and/or wherein the camera connecting structure (170, 270a, 270b, 270c, 270d, 270f, 270f', 370a, 370b, 370c, 370f) comprises a flexible circuit board, in particular a flex PCB or a rigid-flex PCB.

5. The camera module (100, 200, 300) of any preceding claim, wherein an outer surface of the one-piece base structure (110, 210, 310) is at least substantially mirror symmetric with respect to a symmetry plane (S), wherein the scene camera (160, 260, 360) is at least substantially centred with respect to the symmetry plane (S), and/or comprises an optical axis (165, 365) at least substantially arranged in the symmetry plane (S), wherein the first eye camera (140, 240, 340) and the second eye camera (150, 250) are at least substantially mirror-symmetric with respect to the symmetry plane (S), and/or wherein the camera module (100, 200, 300) comprises a fastenings means arranged at least close to the symmetry plane (S) for fastening with a central portion (603) of the support structure of a head-wearable device (600) or a carrier (650) attached to the central portion (603), typically two fastening means (675) which are at least substantially mirror-symmetric with respect to the symmetry plane (S) and/or arranged next to an optical entrance of the scene camera (160, 260, 360).

6. The camera module (100, 200, 300) of claim 5, wherein a distance between the two fastening means (675) is at most about 15 mm or even 10 mm or even only 5 mm, and/or wherein the fastening means (675) are implemented as a respective mechanical fastening means (675), in particular as holes, and/or magnetic fastening means.

7. The camera module (100, 200, 300) of any preceding claim, wherein the camera module is implemented as an eye tracking module, and/or comprises a controller (290) typically arranged on the further circuit board (270c) and/or in the upper portion (120, 220, 320), and in electric connection with all of the camera connecting structure (170, 270a, 270b, 270c, 270d, 270f, 270f', 370a, 370b, 370c, 370f), the scene camera (160, 260, 360), the first eye camera and the second eye camera.

8. A head-wearable eye tracking device (601), comprising:
- a support structure (610) comprising a central portion (603) which is, when the head-wearable eye tracking device (601) is worn by a user, arranged closest to and/or on a nose of the user; and
- a camera module (100, 200, 300) of any of the preceding claims, the camera module (100, 200, 300) being connected with the central portion (603).

9. The head-wearable eye tracking device (601) of claim 8, wherein the first leg portion (134, 234) and the second leg portion (135, 235) are at least substantially mechanically decoupled from the support structure (610), spaced apart from the support structure (610) and/or from the user when the head-wearable eye tracking device (601) is worn by the user, wherein the camera module (100, 200, 300) is attached to the central portion (603) so that a camera pose of the first eye camera (140, 240, 340) and a camera pose of the second eye camera (150, 250) with respect to each other remain at least substantially fixed even when the central portion (603) of the support structure (610) is deformed under normal wearing conditions, in particular by using a fastener fitting with the respective fastening means of the camera module (100, 200, 300), and/or wherein the head-wearable eye tracking device (601) comprises:
- a carrier (650) mechanically connected with and arranged between the upper portion (120, 220, 320) of the one-piece base structure (110, 210, 310) and the central portion (603) of the support structure (610), and configured to reduce a transmission of a deformation of the central portion (603) of the support structure (610) to the upper portion (120, 220, 320) of the camera module (100, 200, 300).

10. The head-wearable eye tracking device (601) of claim 8 or 9, wherein the central portion (603) is, in a lower part (6031), shaped as a nose bridge portion and/or provides a support surface (603c) for the user's nose, wherein the carrier (650) is releasably connected with the upper portion (120, 220, 320) of the one-piece base structure (110, 210) and the central portion (603) of the support structure (610), wherein the carrier (650) comprises an at least substantially central trough hole or transparent region for the scene camera (160, 260, 360), is fastened to the central portion (603), in particular in a mirror symmetric way with respect to the at least substantially central trough hole or transparent region, and/or is implemented as a circuit board, in particular a PCB, and/or wherein the head-wearable eye tracking device (601) comprises a plug-socket connection (171, 172, 655) between the camera module (100, 200, 300) and the carrier (650) or between the camera module (100, 200, 300) and the central portion (603), the plug-socket connection typically comprising at least one spring-loaded pin (655), in particular two respective plug-socket connections arranged mirror symmetric with respect to the symmetry planes (S) of the device, the camera module and the carrier.

11. A method (10) for manufacturing a camera module (100, 200, 300) for a head-wearable device (600), the method comprising:
- providing (11) a mold (400a, 400b) comprising a first fixation structure (401) for a first eye camera (140, 240, 340) and a second fixation structure for a second eye camera (150, 250);
- providing (12) a camera connecting structure (170, 270a, 270b, 270c, 270d, 270f, 270f, 370a, 370b, 370c, 370f) equipped with the first eye camera (140, 240, 340) and the second eye camera (150, 250);
- arranging (13) the camera connecting structure (170, 270a, 270b, 270c, 270d, 270f, 270f, 370a, 370b, 370c, 370f) in the mold (400a, 400b) so that the first eye camera (140, 240, 340) is arranged in and/or at the first fixation structure (401, 400d), and the second eye camera (150, 250) is arranged in and/or at the second fixation structure;
- filling (14) the mold (400a, 400b) with a material; and
- solidifying (15) the material to at least substantially fix a positional and orientational relationship of the first eye camera (140, 240, 340) and the second eye camera (150, 250) with respect to each other.

12. The method of claim 11, wherein solidifying comprises curing of the material, in particular chemical or thermal curing.

13. The method of claim 11 or 12, wherein the camera connecting structure (170, 270a, 270b, 270c, 270d, 270f, 270f, 370a, 370b, 370c, 370f) comprises a flexible board, in particular a flex PCB or a rigid-flex PCB, wherein the camera connecting structure (170, 270a, 270b, 270c, 270d, 270f, 270f, 370a, 370b, 370c, 370f) is additionally provided with at least one of a scene camera (160, 260, 360), a first light source for illuminating a field of view of the first eye camera, and a second light source for illuminating a field of view of the second eye camera, wherein the mold (400a, 400b) comprises a third fixation structure for the scene camera (160, 260, 360) and/or a recess (402) for partly accommodating the scene camera (160, 260, 360), wherein arranging the camera connecting structure (170, 270a, 270b, 270c, 270d, 270f, 270f', 370a, 370b, 370c, 370f) in the mold (400a, 400b) comprises arranging the scene camera (160, 260, 360) in the recess (402) and/or on a sealing support (400c) of the mold (400a, 400b), in particular on and/or at a sealing support for an optical entrance of the scene camera (160, 260, 360) and/or using the third fixation structure (400e, 400f) of the mold (400a, 400b) to fix the camera connecting structure (170, 270a, 270b, 270c, 270d, 270f, 270f', 370a, 370b, 370c, 370f) next to the scene camera (160, 260, 360).

14. The method of any of claims 11 to 13, wherein the first fixation structure (401) is implemented as a first receptacle (401) for a portion of the first eye camera (140, 240, 340) and the second fixation structure is implemented as a second receptacle for a portion of the second eye camera (150, 250), the first receptacle (401) at least substantially positively fitting with a housing of the first eye camera (140, 240) next to an optical entrance of the first eye camera (140, 240, 340), wherein the second fixation structure is implemented as a second receptacle at least substantially positively fitting with a housing of the second eye camera (150, 250) next to an optical entrance of the second eye camera (150, 250), wherein at least one of the first fixation structure (401) and the second fixation structure are implemented as a respective recess or hole in a wall of the mold (400a, 400b), and/or wherein the camera connecting structure (270a, 270b, 270c, 270d, 270f, 270f', 370a, 370b, 370c, 370f) is arranged in the mold (400a, 400b) so that a portion of the first eye camera (140, 240, 340) is arranged in the first receptacle (401) and a portion of the second eye camera (150, 250) is arranged in the second receptacle.

15. The method of any of claims 11 to 14, wherein the material is transparent, and/or is selected from a list comprising a plastic, and a silicone.

## Patentansprüche

1. Kameramodul (100, 200, 300) zur Ergänzung einer Trägerstruktur einer am Kopf tragbaren Vorrichtung (600), insbesondere eines entsprechenden Rahmens (510, 610, 710) der am Kopf tragbaren Vorrichtung, um eine am Kopf tragbare Vorrichtung zur Augenverfolgung (501, 601, 701) zu bilden, wobei das Kameramodul (100, 200, 300) aufweist:
- eine einteilige Basisstruktur (110, 210, 310), die ein zumindest halbtransparentes Material, typischerweise ein im Wesentlichen transparentes Material, aufweist und einen oberen Abschnitt (120, 220, 320), einen ersten Schenkelabschnitt (134, 234) und einen zweiten Schenkelabschnitt (135, 235) aufweist;
- eine Kameraverbindungsstruktur (170, 270a, 270b, 270c, 270d, 270f, 270f, 370a, 370b, 370c, 370f), die in die einteilige Basisstruktur (110, 210, 310) eingebettet ist;
- eine erste Augenkamera (140, 240, 340), die mit der Kameraverbindungsstruktur (170, 270a, 270b, 270c, 270d, 270f, 270f, 370a, 370b, 370c, 370f) verbunden und in und/oder an dem ersten Schenkelabschnitt (134, 234) angeordnet ist;
- eine zweite Augenkamera (150, 250), die mit der Kameraverbindungsstruktur (170, 270a, 270b, 270c, 270d, 270f, 270f, 370a, 370b, 370c, 370f) verbunden und in und/oder an dem zweiten Schenkelabschnitt (135, 235) angeordnet ist; und
- eine Szenenkamera (160, 260, 360), die mit der Kameraverbindungsstruktur (170, 270a, 270b, 270c, 270d, 270f, 270f, 370a, 370b, 370c, 370f) verbunden und in und/oder an dem oberen Abschnitt (120, 220, 320) angeordnet ist.

2. Das Kameramodul (100, 200, 300) nach Anspruch 1, wobei das Kameramodul (100, 200, 300) so geformt ist, dass der erste Schenkelabschnitt (134, 234) und der zweite Schenkelabschnitt (135, 235) von einem Nutzer und/oder der Trägerstruktur beabstandet sind, wenn der Nutzer die am Kopf tragbare Vorrichtung (600) zur Augenverfolgung trägt, wobei das Kameramodul (100, 200, 300) durch Umspritzen gebildet ist, wobei das Material ein gehärtetes Material ist, wobei die Kameraverbindungsstruktur (170, 270a, 270b, 270c, 270d, 270f, 270f, 370a, 370b, 370c, 370f) in die einteilige Basisstruktur (110, 210, 310) eingebettet ist, wobei die einteilige Basisstruktur (110, 210, 310) in einem IR-Lichtbereich, insbesondere einem IR-nahen Lichtbereich, und/oder für Licht in einem sichtbaren Bereich im Wesentlichen transparent ist, und/oder wobei die einteilige Basisstruktur (110, 210, 310) zumindest eines aus einem Silikon und einem Kunststoff aufweist.

3. Kameramodul (100, 200, 300) nach einem der vorhergehenden Ansprüche, wobei mindestens eine der ersten Augenkamera (140, 240, 340), der zweiten Augenkamera (150, 250) und der Szenenkamera (160, 260, 360) zumindest teilweise in die einteilige Basisstruktur (110, 210, 310) eingebettet ist, wobei mindestens eine der ersten Augenkamera (140, 240, 340), der zweiten Augenkamera (150, 250) und der Szenenkamera (160, 260, 360) wasserdicht in der einteiligen Basisstruktur (110, 210, 310) angeordnet ist, und/oder wobei das Kameramodul (100, 200, 300) wasserdicht ist.

4. Kameramodul (100, 200, 300) nach einem der vorhergehenden Ansprüche, wobei mindestens eine der ersten Augenkamera (140, 240, 340), der zweiten Augenkamera (150, 250) und der Szenenkamera (160, 260, 360) mechanisch und elektrisch mit der Kameraverbindungsstruktur (170, 270a, 270b, 270c, 270d, 270f, 270f, 370a, 370b, 370c, 370f) verbunden ist, wobei die Kameraverbindungsstruktur (170, 270a, 270b, 270c, 270d, 270f, 270f, 370a, 370b, 370c, 370f) zumindest teilweise flexibel ist, wobei die Kameraverbindungsstruktur (170, 270a, 270b, 270c, 270d, 270f, 270f, 370a, 370b, 370c, 370f) eine Leiterplatte aufweist, typischerweise eine jeweilige Leiterplatte (370a, 370b) für jede der ersten Augenkamera (140, 240, 340), der zweiten Augenkamera (150, 250) und der Szenenkamera (160, 260, 360), eine weitere Leiterplatte (370c), die typischerweise zum Empfangen entsprechender Bilder von jeder der ersten Augenkamera (140, 240, 340), der zweiten Augenkamera (150, 250) und der Szenenkamera (160, 260, 360), und eine Drahtverbindung zwischen den Leiterplatten (170, 270a, 270b, 270c, 270d, 270f, 270f, 370a, 370b, 370c, 370f), und/oder wobei die Kameraverbindungsstruktur (170, 270a, 270b, 270c, 270d, 270f, 270f, 370a, 370b, 370c, 370f) eine flexible Leiterplatte, insbesondere eine Flex-Leiterplatte oder eine Starr-Flex-Leiterplatte aufweist.

5. Kameramodul (100, 200, 300) nach einem der vorhergehenden Ansprüche, wobei eine Außenfläche der einteiligen Basisstruktur (110, 210, 310) zumindest im Wesentlichen spiegelsymmetrisch in Bezug auf eine Symmetrieebene (S) ist, wobei die Szenenkamera (160, 260, 360) zumindest im Wesentlichen zentriert in Bezug auf die Symmetrieebene (S) ist und/oder eine optische Achse (165, 365) aufweist, die zumindest im Wesentlichen in der Symmetrieebene (S) angeordnet ist, wobei die erste Augenkamera (140, 240, 340) und die zweite Augenkamera (150, 250) zumindest im Wesentlichen spiegelsymmetrisch zur Symmetrieebene (S) sind, und/oder wobei das Kameramodul (100, 200, 300) ein zumindest nahe der Symmetrieebene (S) angeordnetes Befestigungsmittel zur Befestigung mit einem Mittelteil (603) einer Tragstruktur einer am Kopf tragbaren Vorrichtung (600) oder einem am Mittelteil (603) angebrachten Träger (650) aufweist, typischerweise zwei Befestigungsmittel (675), die zumindest im Wesentlichen spiegelsymmetrisch zur Symmetrieebene (S) sind und/oder neben einem optischen Eingang der Szenenkamera (160, 260, 360) angeordnet sind.

6. Kameramodul (100, 200, 300) nach Anspruch 5, wobei ein Abstand zwischen den beiden Befestigungsmitteln (675) höchstens etwa 15 mm oder sogar 10 mm oder sogar nur 5 mm beträgt, und/oder wobei die Befestigungsmittel (675) jeweils als mechanisches Befestigungsmittel (675), insbesondere als Löcher, und/oder magnetisches Befestigungsmittel ausgeführt sind.

7. Das Kameramodul (100, 200, 300) nach einem der vorhergehenden Ansprüche, wobei das Kameramodul als ein Augenverfolgungsmodul implementiert ist und/oder einen Controller (290) aufweist, der typischerweise auf der weiteren Leiterplatte (270c) und/oder im oberen Teil (120, 220, 320) angeordnet ist und in elektrischer Verbindung mit der Kameraverbindungsstruktur (170, 270a, 270b, 270c, 270d, 270f, 270f, 370a, 370b, 370c, 370f), der Szenenkamera (160, 260, 360), der ersten Augenkamera und der zweiten Augenkamera steht.

8. Am Kopf tragbare Vorrichtung zur Augenverfolgung (601), die folgendes aufweist:
- eine Trägerstruktur (610), die ein Mittelteil (603) aufweist, der, wenn die am Kopf tragbare Vorrichtung (601) zur Augenverfolgung von einem Nutzer getragen wird, möglichst nahe an und/oder auf einer Nase des Nutzers angeordnet ist; und
- ein Kameramodul (100, 200, 300) nach einem der vorhergehenden Ansprüche, wobei das Kameramodul (100, 200, 300) mit dem Mittelteil (603) verbunden ist.

9. Am Kopf tragbare Vorrichtung (601) nach Anspruch 8, wobei der erste Schenkelabschnitt (134, 234) und der zweite Schenkelabschnitt (135, 235) zumindest im Wesentlichen mechanisch von der Trägerstruktur (610) entkoppelt und von der Trägerstruktur (610) und/oder vom Nutzer beabstandet sind, wenn die am Kopf tragbare Vorrichtung (601) vom Nutzer getragen wird, wobei das Kameramodul (100, 200, 300) an dem Mittelteil (603) befestigt ist, so dass eine Kameraposition der ersten Augenkamera (140, 240, 340) und eine Kameraposition der zweiten Augenkamera (150, 250) in Bezug aufeinander zumindest im Wesentlichen fixiert bleiben, selbst wenn der Mittelteil (603) der Trägerstruktur (610) unter normalen Tragebedingungen verformt wird, insbesondere durch Verwendung eines Befestigungsmittels, das zu den jeweiligen Befestigungsmitteln des Kameramoduls (100, 200, 300) passt, und/oder wobei die am Kopf tragbare Vorrichtung (601) zur Augenverfolgung aufweist:
- einen Träger (650), der mechanisch mit dem oberen Abschnitt (120, 220, 320) der einteiligen Basisstruktur (110, 210, 310) und dem mittleren Abschnitt (603) der Trägerstruktur (610) verbunden und zwischen diesen angeordnet ist, und der so konfiguriert ist, dass er die Übertragung einer Verformung des zentralen Abschnitts (603) der Trägerstruktur (610) auf den oberen Abschnitt (120, 220, 320) des Kameramoduls (100, 200, 300) reduzieren kann.

10. Die am Kopf tragbare Vorrichtung zur Augenverfolgung (601) nach Anspruch 8 oder 9, wobei der Mittelteil (603) in einem unteren Teil (6031) als Nasenbrückenteil ausgebildet ist und/oder eine Auflagefläche (603c) für die Nase des Nutzers bietet, wobei der Träger (650) mit dem oberen Teil (120, 220, 320) der einteiligen Basisstruktur (110, 210) und dem Mittelteil (603) der Trägerstruktur (610) lösbar verbunden ist, wobei der Träger (650) ein zumindest im wesentlichen zentrales Durchgangsloch oder einen transparenten Bereich für die Szenekamera (160, 260, 360) aufweist, an dem Mittelteil (603) insbesondere spiegelsymmetrisch zu dem zumindest im wesentlichen zentralen Durchgangsloch oder transparenten Bereich befestigt ist und/oder als Leiterplatte ausgebildet ist, wobei die am Kopf tragbare Vorrichtung (601) eine Steckverbindung (171, 172, 655) zwischen dem Kameramodul (100, 200, 300) und dem Träger (650) oder zwischen dem Kameramodul (100, 200, 300) und dem Mittelteil (603) aufweist, wobei die Steckverbindung typischerweise mindestens einen gefederten Stift (655) aufweist, insbesondere jeweils zwei spiegelsymmetrisch zu den Symmetrieebenen (S) der Vorrichtung, des Kameramoduls und des Trägers angeordnete Steckverbindungen.

11. Verfahren (10) zur Herstellung eines Kameramoduls (100, 200, 300) für eine am Kopf tragbare Vorrichtung (600), wobei das Verfahren folgendes aufweist:
- Bereitstellen (11) einer Form (400a, 400b), die eine erste Fixierungsstruktur (401) für eine erste Augenkamera (140, 240, 340) und eine zweite Fixierungsstruktur für eine zweite Augenkamera (150, 250) aufweist;
- Bereitstellen (12) einer Kameraverbindungsstruktur (170, 270a, 270b, 270c, 270d, 270f, 270f, 370a, 370b, 370c, 370f), die mit der ersten Augenkamera (140, 240, 340) und der zweiten Augenkamera (150, 250) ausgestattet ist;
- Anordnen (13) der Kameraverbindungsstruktur (170, 270a, 270b, 270c, 270d, 270f, 270f, 370a, 370b, 370c, 370f) in der Form (400a, 400b), so dass die erste Augenkamera (140, 240, 340) in und/oder an der ersten Fixierungsstruktur (401, 400d) angeordnet ist und die zweite Augenkamera (150, 250) in und/oder an der zweiten Fixierungsstruktur angeordnet ist;
- Füllen (14) der Form (400a, 400b) mit einem Material; und
- Verfestigen (15) des Materials, um zumindest im Wesentlichen eine Positions- und Orientierungsbeziehung der ersten Augenkamera (140, 240, 340) und der zweiten Augenkamera (150, 250) in Bezug aufeinander zu fixieren.

12. Verfahren nach Anspruch 11, wobei das Verfestigen ein Aushärten des Materials, insbesondere das chemische oder thermische Aushärten, aufweist.

13. Verfahren nach Anspruch 11 oder 12, wobei die Kameraanschlussstruktur (170, 270a, 270b, 270c, 270d, 270f, 270f, 370a, 370b, 370c, 370f) eine flexible Leiterplatte, insbesondere eine Flex-Leiterplatte oder eine Starr-Flex-Leiterplatte aufweist, wobei die Kameraanschlussstruktur (170, 270a, 270b, 270c, 270d, 270f, 270f, 370a, 370b, 370c, 370f) zusätzlich mit mindestens einer Szenenkamera (160, 260, 360), einer ersten Lichtquelle zur Beleuchtung eines Sichtfeldes der ersten Augenkamera, einer ersten Lichtquelle zur Beleuchtung eines Sichtfeldes der ersten Augenkamera und/oder einer zweiten Lichtquelle zur Beleuchtung eines Sichtfeldes der zweiten Augenkamera versehen ist, wobei die Form (400a, 400b) eine dritte Befestigungsstruktur für die Szenenkamera (160, 260, 360) und/oder eine Ausnehmung (402) zur teilweisen Aufnahme der Szenenkamera (160, 260, 360) aufweist, wobei das Anordnen der Kameraverbindungsstruktur (170, 270a, 270b, 270c, 270d, 270f, 270f, 370a, 370b, 370c, 370f) in der Form (400a, 400b) ein Anordnen der Szenenkamera (160, 260, 360) in der Ausnehmung (402) und/oder auf einem Dichtungsträger (400c) der Form (400a, 400b), insbesondere auf und/oder an einem jeweiligen Dichtungsträger für einen optischen Eingang der Szenenkamera (160, 260, 360) und/oder ein Verwenden der dritten Befestigungsstruktur (400e, 400f) der Form (400a, 400b) zum Befestigen der Kameraverbindungsstruktur (170, 270a, 270b, 270c, 270d, 270f, 270f, 370a, 370b, 370c, 370f) neben der Szenenkamera (160, 260, 360) umfasst.

14. Verfahren nach einem der Ansprüche 11 bis 13, wobei die erste Fixierungsstruktur (401) als erste Aufnahme (401) für einen Teil der ersten Augenkamera (140, 240, 340) und die zweite Fixierungsstruktur als zweite Aufnahme für einen Teil der zweiten Augenkamera (150, 250) ausgeführt ist, wobei die erste Aufnahme (401) zumindest im Wesentlichen formschlüssig mit einem Gehäuse der ersten Augenkamera (140, 240) neben einem optischen Eingang der ersten Augenkamera (140, 240, 340) zusammenpasst, wobei die zweite Fixierungsstruktur als zweite Aufnahme zumindest im Wesentlichen formschlüssig mit einem Gehäuse der zweiten Augenkamera (150, 250) neben einem optischen Eingang der zweiten Augenkamera (150, 250) zusammenpasst, wobei mindestens eine der ersten Fixierungsstruktur (401) und der zweiten Fixierungsstruktur als eine jeweilige Aussparung oder ein Loch in einer Wand der Form (400a, 400b) ausgebildet ist, und/oder wobei die Kameraverbindungsstruktur (270a, 270b, 270c, 270d, 270f, 270f, 370a, 370b, 370c, 370f) in der Form (400a, 400b) angeordnet ist, so dass ein Teil der ersten Augenkamera (140, 240, 340) in der ersten Aufnahme (401) und ein Teil der zweiten Augenkamera (150, 250) in der zweiten Aufnahme angeordnet ist.

15. Verfahren nach einem der Ansprüche 11 bis 14, wobei das Material transparent ist und/oder aus einer Liste ausgewählt ist, die einen Kunststoff und ein Silikon aufweist.

## Revendications

1. Module de caméra (100, 200, 300) pour compléter une structure de support d'un dispositif à porter sur la tête (600), en particulier un cadre (510, 610, 710) respectif du dispositif à porter sur la tête, afin de former un dispositif de suivi oculaire à porter sur la tête (501, 601, 701), le module de caméra (100, 200, 300) comprenant :
- une structure de base d'un seul tenant (110, 210, 310) comprenant au moins un matériau semi-transparent, typiquement un matériau sensiblement transparent, et comprenant une partie supérieure (120, 220, 320), une première partie de patte (134, 234) et une seconde partie de patte (135, 235) ;
- une structure de raccordement de caméra (170, 270a, 270b, 270c, 270d, 270f, 270f', 370a, 370b, 370c, 370f) intégrée dans la structure de base d'un seul tenant (110, 210, 310) ;
- une première caméra oculaire (140, 240, 340) raccordée avec la structure de raccordement de caméra (170, 270a, 270b, 270c, 270d, 270f, 270f', 370a, 370b, 370c, 370f) et agencée dans et/ou sur la première partie de patte (134, 234) ;
- une seconde caméra oculaire (150, 250) raccordée avec la structure de raccordement de caméra (170, 270a, 270b, 270c, 270d, 270f, 270f', 370a, 370b, 370c, 370f) et agencée dans et/ou sur la seconde partie de patte (135, 235) ; et
- une caméra de scène (160, 260, 360) raccordée avec la structure de raccordement de caméra (170, 270a, 270b, 270c, 270d, 270f, 270f', 370a, 370b, 370c, 370f) et agencée dans et/ou sur la partie supérieure (120, 220, 320).

2. Module de caméra (100, 200,300) selon la revendication 1, dans lequel le module de caméra (100, 200, 300) est formé de sorte que la première partie de patte (134, 234) et la seconde partie de patte (135, 235) sont espacées d'un utilisateur et/ou de la structure de support lorsque l'utilisateur porte le dispositif de suivi oculaire à porter sur la tête (600), dans lequel le module de caméra (100, 200, 300) est formé par surmoulage, dans lequel le matériau est un matériau durci, dans lequel la structure de raccordement de caméra (170, 270a, 270b, 270c, 270d, 270f, 270f', 370a, 370b, 370c, 370f) est intégrée dans la structure de base d'un seul tenant (110, 210, 310), dans lequel la structure de base d'un seul tenant (110, 210, 310) est sensiblement transparente dans une plage de lumière infrarouge, en particulier une plage de lumière proche infrarouge et/ou pour la lumière dans une plage visible, et/ou dans lequel la structure de base d'un seul tenant (110, 210, 310) comprend au moins l'un parmi une silicone et un plastique.

3. Module de caméra (100, 200, 300) selon l'une quelconque des revendications précédentes, dans lequel au moins l'une parmi la première caméra oculaire (140, 240, 340), la seconde caméra oculaire (150, 250) et la caméra de scène (160, 260, 360) est au moins partiellement intégrée dans la structure de base d'un seul tenant (110, 210, 310), dans lequel au moins l'une parmi la première caméra oculaire (140, 240, 340), la seconde caméra oculaire (150, 250) et la caméra de scène (160, 260, 360) est agencée de manière imperméable dans la structure de support d'un seul tenant (110, 210, 310) et/ou dans lequel le module de caméra (100, 200, 300) est imperméable.

4. Module de caméra (100, 200, 300) selon l'une quelconque des revendications précédentes, dans lequel au moins l'une parmi la première caméra oculaire (140, 240, 340), la seconde caméra oculaire (150, 250) et la caméra de scène (160, 260,360) est mécaniquement et électriquement raccordée à la structure de raccordement de caméra (170, 270a, 270b, 270c, 270d, 270f, 270f', 370a, 370b, 370c, 370f), dans lequel la structure de raccordement de caméra (170, 270a, 270b, 270c, 270d, 270f, 270f', 370a, 370b, 370c, 370f) est au moins partiellement flexible, dans lequel la structure de raccordement de caméra (170, 270a, 270b, 270c, 270d, 270f, 270f', 370a, 370b, 370c, 370f) comprend une carte de circuit imprimé, plus typiquement une carte de circuit imprimé (370a, 370b) respective pour chacune parmi la première caméra oculaire (140, 240, 340), la seconde caméra oculaire (160, 260, 360), une autre carte de circuit imprimé (370c) typiquement configurée pour recevoir des images respectives de chacune parmi la première caméra oculaire (140, 240, 340), la seconde caméra oculaire (150, 250) et la caméra de scène (160, 260, 360) et un raccordement de fil entre les cartes de circuit imprimé (170, 270a, 270b, 270c, 270d, 270f, 270f', 370a, 370b, 370c, 370f) et/ou dans lequel la structure de raccordement de caméra (170, 270a, 270b, 270c, 270d, 270f, 270f', 370a, 370b, 370c, 370f) comprend une carte de circuit imprimé souple, en particulier une PCB flexible ou une PCB rigide-flexible.

5. Module de caméra (100, 200, 300) selon l'une quelconque des revendications précédentes, dans lequel une surface externe de la structure de base d'un seul tenant (110, 210, 310) est au moins sensiblement symétrique en miroir par rapport à un plan de symétrie (S), dans lequel la caméra de scène (160, 260, 360) est au moins sensiblement centrée par rapport au plan de symétrie (S), et/ou comprend un axe optique (165, 365) agencé au moins sensiblement dans le plan de symétrie (S), dans lequel la première caméra oculaire (140, 240, 340) et la seconde caméra oculaire (150, 250) sont au moins sensiblement symétriques en miroir par rapport au plan de symétrie (S), et/ou dans lequel le module de caméra (100, 200, 300) comprend un moyen de fixation agencé au moins à proximité du plan de symétrie (S) pour se fixer avec une partie centrale (603) de la structure de support du dispositif à porter sur la tête (600) ou un support (650) fixé sur la partie centrale (603), typiquement deux moyens de fixation (675) qui sont au moins symétriques en miroir par rapport au plan de symétrie (S) et/ou agencés après une entrée optique de la caméra de scène (160, 260, 360).

6. Module de caméra (100, 200, 300) selon la revendication 5, dans lequel une distance entre les deux moyens de fixation (675) est au maximum d'environ 15 mm ou même de 10 mm ou même d'uniquement 5 mm, et/ou dans lequel les moyens de fixation (675) sont mis en œuvre sous la forme de moyens de fixation mécaniques (675) respectifs, en particulier tels que des trous et/ou des moyens de fixation magnétiques.

7. Module de caméra (100, 200, 300) selon l'une quelconque des revendications précédentes, dans lequel le module de caméra est mis en œuvre sous la forme d'un module de suivi oculaire, et/ou comprend un organe de commande (290) typiquement agencé sur l'autre carte de circuit imprimé (270c) et/ou dans la partie supérieure (120, 220, 320) et en raccordement électrique à la fois avec la structure de raccordement de caméra (170, 270a, 270b, 270c, 270d, 270f, 270f', 370a, 370b, 370c, 370f), une caméra de scène (160, 260, 360), la première caméra oculaire et la seconde caméra oculaire.

8. Dispositif de suivi oculaire à porter sur la tête (601) comprenant :
- une structure de support (610) comprenant une partie centrale (603) qui est, lorsque le dispositif de suivi oculaire à porter sur la tête (601) est porté par un utilisateur, agencée le plus à proximité de et/ou sur le nez de l'utilisateur ; et
- un module de caméra (100, 200, 300) selon l'une quelconque des revendications précédentes, le module de caméra (100, 200, 300) étant raccordé avec la partie centrale (603).

9. Dispositif de suivi oculaire à porter sur la tête (601) selon la revendication 8, dans lequel la première partie de patte (134, 234) et la seconde partie de patte (135, 235) sont au moins sensiblement mécaniquement découplées de la structure de support (610), espacées de la structure de support (610) et/ou de l'utilisateur lorsque le dispositif de suivi oculaire à porter sur la tête (601) est porté par l'utilisateur, dans lequel le module de caméra (100, 200, 300) est fixé sur la partie centrale (603), de sorte qu'une pose de caméra de la première caméra oculaire (140, 240, 340) et une pose de caméra de la seconde caméra oculaire (150, 250) l'une par rapport à l'autre restent au moins sensiblement fixes même lorsque la partie centrale (603) de la structure de support (610) est déformée dans des conditions de port normales, en particulier en utilisant un raccord de fixation avec les moyens de fixation respectifs du module de caméra (100, 200, 300) et/ou dans lequel le dispositif de suivi oculaire à porter sur la tête (601) comprend :
- un support (650) mécaniquement raccordé avec et agencé entre la partie supérieure (120, 220, 320) de la structure de base d'un seul tenant (110, 210, 310) et la partie centrale (603) de la structure de support (610), et configuré pour réduire une transmission d'une déformation de la partie centrale (603) de la structure de support (610) à la partie supérieure (120, 220, 320) du module de caméra (100, 200, 300).

10. Dispositif de suivi oculaire à porter sur la tête (601) selon la revendication 8 ou 9, dans lequel la partie centrale (603) est, dans une partie inférieure (6031), formée comme une partie de pont de nez et/ou fournit une surface de support (603c) pour le nez de l'utilisateur, dans lequel le support (650) est raccordé, de manière amovible, avec la partie supérieure (120, 220, 320) de la structure de base d'un seul tenant (110, 210) et la partie centrale (603) de la structure de support (610), dans lequel le support (650) comprend un trou débouchant au moins sensiblement central ou une région transparente pour la caméra de scène (160, 260, 360), est fixé(e) sur la partie centrale (603), en particulier d'une manière symétrique en miroir par rapport au au moins un trou débouchant sensiblement central ou à la région transparente et/ou est mis en œuvre sous la forme d'une carte de circuit imprimé, en particulier une PCB et/ou dans lequel le dispositif de suivi oculaire à porter sur la tête (601) comprend un raccordement mâle-femelle (171, 172, 655) entre le module de caméra (100, 200, 300) et le support (650) ou bien entre le module de caméra (100, 200, 300) et la partie centrale (603), le raccordement mâle-femelle comprenant typiquement au moins une broche à ressort (655), en particulier deux raccordements mâle-femelle respectifs agencés de manière symétrique en miroir par rapport aux plans de symétrie (S) du dispositif, au module de caméra et au support.

11. Procédé (10) pour fabriquer un module de caméra (100, 200, 300) pour un dispositif à porter sur la tête (600), le procédé comprenant les étapes consistant à :
- prévoir (11) un moule (400a, 400b) comprenant une première structure de fixation (401) pour une première caméra oculaire (140, 240, 340) et une deuxième structure de fixation pour une seconde caméra oculaire (150, 250) ;
- prévoir (12) une structure de raccordement de caméra (170, 270a, 270b, 270c, 270d, 270f, 270f', 370a, 370b, 370c, 370f) équipée avec la première caméra oculaire (140, 240, 340) et la seconde caméra oculaire (150, 250) ;
- agencer (13) la structure de raccordement de caméra (170, 270a, 270b, 270c, 270d, 270f, 270f', 370a, 370b, 370c, 370f) dans le moule (400a, 400b), de sorte que la première caméra oculaire (140, 240, 340) est agencée dans et/ou au niveau de la première structure de fixation (401, 400d), et la seconde caméra oculaire (150, 250) est agencée dans et/ou au niveau de la deuxième structure de fixation ;
- remplir (14) le moule (400a, 400b) avec un matériau ; et
- solidifier (15) le matériau pour déterminer au moins sensiblement une relation de position et d'orientation de la première caméra oculaire (140, 240, 340) et de la seconde caméra oculaire (150,250) l'une par rapport à l'autre.

12. Procédé selon la revendication 11, dans lequel l'étape de solidification comprend l'étape consistant à faire durcir le matériau, en particulier un durcissement chimique ou thermique.

13. Procédé selon la revendication 11 ou 12, dans lequel la structure de raccordement de caméra (170, 270a, 270b, 270c, 270d, 270f, 270f', 370a, 370b, 370c, 370f) comprend une carte flexible, en particulier une PCB flexible ou une PCB rigide-flexible, dans lequel la structure de raccordement de caméra (170, 270a, 270b, 270c, 270d, 270f, 270f', 370a, 370b, 370c, 370f) est de plus prévue avec au moins une parmi une caméra de scène (160, 260, 360), une première source de lumière pour éclairer un champ de vision de la première caméra oculaire et une seconde source de lumière pour éclairer un champ de vision de la seconde caméra oculaire, dans lequel le moule (400a, 400b) comprend une troisième structure de fixation pour la caméra de scène (160, 260, 360) et/ou un évidement (402) pour loger partiellement la caméra de scène (160, 260, 360), dans lequel l'étape consistant à agencer la structure de raccordement de caméra (170, 270a, 270b, 270c, 270d, 270f, 270f', 370a, 370b, 370c, 370f) dans le moule (400a, 400b) comprend l'étape consistant à agencer la caméra de scène (160, 260, 360) dans l'évidement (402) et/ou sur un support d'étanchéité (400c) du moule (400a, 400b), en particulier sur et/ou au niveau d'un support étanche pour une entrée optique de la caméra de scène (160, 260, 360) et/ou utiliser la troisième structure de fixation (400e, 400f) du moule (400a, 400b) pour fixer la structure de raccordement de caméra (170, 270a, 270b, 270c, 270d, 270f, 270f', 370a, 370b, 370c, 370f) à côté de la caméra de scène (160, 260, 360).

14. Procédé selon l'une quelconque des revendications 11 à 13, dans lequel la première structure de fixation (401) est mise en œuvre sous la forme d'un premier réceptacle (401) pour une partie de la première caméra oculaire (140, 240, 340) et la deuxième structure de fixation est mise en œuvre sous la forme d'un second réceptacle pour une partie de la seconde caméra oculaire (150, 250), le premier réceptacle (401) s'ajustant au moins sensiblement positivement avec un boîtier de la première caméra oculaire (140, 240) à côté d'une entrée optique de la première caméra oculaire (140, 240, 340), dans lequel la deuxième structure de fixation est mise en œuvre sous la forme d'un second réceptacle s'ajustant au moins sensiblement positivement avec un boîtier de la seconde caméra oculaire (150,250) à côté d'une entrée optique de la seconde caméra oculaire (150, 250), dans lequel au moins l'une parmi la première structure de fixation (401) et la deuxième structure de fixation est mise en œuvre sous la forme d'un évidement ou trou respectif dans une paroi du moule (400a, 400b) et/ou dans lequel la structure de raccordement de caméra (170, 270a, 270b, 270c, 270d, 270f, 270f', 370a, 370b, 370c, 370f) est agencée dans le moule (400a, 400b) de sorte qu'une partie de la première caméra oculaire (140, 240, 340) est agencée dans le premier réceptacle (401) et une partie de la seconde caméra oculaire (150, 250) est agencée dans le second réceptacle.

15. Procédé selon l'une quelconque des revendications 11 à 14, dans lequel le matériau est transparent et/ou est sélectionné à partir d'une liste comprenant un plastique et une silicone.
